# EUROPEAN PATENT SPECIFICATION

(11) **EP 4 583 437 B1**
(45) Date of publication and mention of the grant of the patent: **02.12.2026**
(21) Application number: 23881500.5
(22) Date of filing: 12.09.2023
(51) Int. Cl.: H04W 76/23, H04L 1/1867, H04W 92/18, H04W 76/28, H04W 24/04, H04W 72/25

(54) **INFORMATION TRANSMISSION METHOD AND APPARATUS**
INFORMATIONSÜBERTRAGUNGSVERFAHREN UND -VORRICHTUNG
PROCÉDÉ ET APPAREIL DE TRANSMISSION D'INFORMATION

(30) Priority: 27.10.2022 CN 202211323013
(43) Date of publication of application: 09.07.2025
(73) Proprietor: Huawei Technologies Co., Ltd., Shenzhen, Guangdong 518129 (CN)
(72) Inventor: WU, Hao, Shenzhen, Guangdong 518129 (CN); PENG, Wenjie, Shenzhen, Guangdong 518129 (CN)
(74) Representative: Gill Jennings & Every LLP
(86) International application number: PCT/CN2023/118303
(87) International publication number: WO 2024/087919

(56) References cited:
- WO-A1-2021/091294
- WO-A1-2021/154030
- WO-A1-2021/230672
- WO-A1-2022/141614
- WO-A1-2023/060437
- WO-A1-2023/073210
- US-A1- 2020 351 707
- US-A1- 2021 136 856
- SESSION CHAIR (SAMSUNG): "Report from session on NR SL", 3GPP DRAFT; R2_122_SL_SESSION%20NOTES%20(KYEONGIN%20JEONG)_05211900, 3RD GENERATION PARTNERSHIP PROJECT (3GPP), 30 May 2023 (2023-05-30), XP052705957
- LI ZHAO, XIAOMI: "Discussion on carrier aggregation for NR sidelink", 3GPP DRAFT; R2-2305231; TYPE DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. 3GPP RAN 2, no. Incheon, KR; 20230522 - 20230526, 12 May 2023 (2023-05-12), Mobile Competence Centre ; 650, route des Lucioles ; F-06921 Sophia-Antipolis Cedex ; France, XP052314456
- LG ELECTRONICS INC.: "Corrections to 5G V2X with NR Sidelink", 3GPP DRAFT; R2-2008111, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20200817 - 20200828, 14 August 2020 (2020-08-14), Mobile Competence Centre ; 650, route des Lucioles ; F-06921 Sophia-Antipolis Cedex ; France , XP051920666

## Description

### TECHNICAL FIELD

This application relates to the communication field, and more specifically, to an information transmission method and an apparatus.

### BACKGROUND

In a wireless communication system, data communication between terminals may be performed via a network device, or communication between terminals may be directly performed without using a network device. An interface between terminals is referred to as a PC5 interface, and is similar to a Uu interface between a terminal and a base station. A link between terminals is referred to as a sidelink (sidelink, SL). Data transmission may be directly performed between the terminals over the sidelink without using the network device. This can effectively reduce a communication delay.

The sidelink supports unicast communication, multicast communication, and broadcast communication. In unicast communication, unicast communication can be performed only between two terminals that have established a unicast connection. Both unicast communication and multicast communication on the sidelink support hybrid automatic repeat request (hybrid automatic repeat request, HARQ) feedback.

Currently, in a HARQ feedback-based SL radio link failure (radio link failure, RLF) detection (HARQ-based SL RLF detection) mechanism, a terminal is configured with a maximum consecutive discontinuous transmission (discontinuous transmission, DTX) configuration parameter (sl-maxNumConsecutiveDTX) to determine an SL RLF based on HARQ feedback, the terminal maintains a counter for recording a quantity of consecutive DTXs for each unicast connection, and when a quantity of consecutive DTXs detected by the terminal for a unicast connection reaches sl-maxNumConsecutiveDTX, an SL RLF of the unicast connection is triggered. SL carriers may be classified into a low-frequency carrier and a high-frequency carrier. The terminal records a consecutive DTX count for each unicast connection, and communication link statuses of the low-frequency carrier and the high-frequency carrier cannot be distinguished. SL carriers may alternatively be classified into a licensed carrier and an unlicensed carrier. The terminal records a consecutive DTX count for each unicast connection, and communication link statuses of the licensed carrier and the unlicensed carrier cannot be distinguished. SL carriers may alternatively be classified into a primary carrier and a secondary carrier. The terminal records a consecutive DTX count for each unicast connection, and communication link statuses of the primary carrier and the secondary carrier cannot be distinguished. US 2020/0351707 Al relates to radio link monitoring in sidelink communications.

### SUMMARY

This application provides an information transmission method and an apparatus, to improve reliability of information transmission on a sidelink.

According to a first aspect, an information transmission method is provided. The method may be performed by a chip or a chip system on a terminal side. The method is used by a first terminal to perform unicast communication with a second terminal over a sidelink. The method includes: The first terminal receives configuration information from a network device, where the configuration information includes a first consecutive discontinuous transmission DTX threshold and a second consecutive DTX threshold, the first consecutive DTX threshold is associated with a first carrier group, and the second consecutive DTX threshold is associated with a second carrier group; the first terminal sends first information to the second terminal by using a carrier in the first carrier group; the first terminal sends second information to the second terminal by using a carrier in the second carrier group; and the first terminal stops performing information transmission by using the first carrier group if a quantity of times that the first terminal consecutively fails to detect a first hybrid automatic repeat request HARQ feedback message corresponding to the first information is greater than or equal to the first consecutive DTX threshold; and/or the first terminal stops performing information transmission by using the second carrier group if a quantity of times that the first terminal consecutively fails to detect a second HARQ feedback message corresponding to the second information is greater than or equal to the second consecutive DTX threshold.

Based on the foregoing technical solution, the first terminal records the quantity of times that the first HARQ feedback message is consecutively not detected in a process of sending the first information to the second terminal by using the carrier in the first carrier group, and records the quantity of times that the second HARQ feedback message is consecutively not detected in a process of sending the second information to the second terminal by using the carrier in the second carrier group. The first terminal stops performing information transmission by using the first carrier group and may continue to perform information transmission by using the second carrier group if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is less than the second consecutive DTX threshold. The first terminal stops performing information transmission by using the second carrier group and may continue to perform information transmission by using the first carrier group if the quantity of times that the first terminal consecutively fails to detect the first HARQ feedback message corresponding to the first information is less than the first consecutive DTX threshold and the quantity of times that the first terminal consecutively fails to detect the second HARQ feedback message corresponding to the second information is greater than or equal to the second consecutive DTX threshold. Compared with a solution in which one numConsecutiveDTX is recorded and one consecutive DTX threshold is configured for all carriers, the technical solution in this embodiment of this application can improve reliability of information transmission on the sidelink.

With reference to the first aspect, in some implementations of the first aspect, the method further includes: The first terminal releases a unicast connection between the first terminal and the second terminal if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold.

With reference to the first aspect, in some implementations of the first aspect, the first carrier group includes a low-frequency carrier, and the second carrier group includes a high-frequency carrier; or the first carrier group includes a licensed spectrum carrier, and the second carrier group includes an unlicensed spectrum carrier.

With reference to the first aspect, in some implementations of the first aspect, the second consecutive DTX threshold is greater than the first consecutive DTX threshold.

When the first carrier group includes the low-frequency carrier, and the second carrier group includes the high-frequency carrier, a communication distance of the high-frequency carrier is short, and a probability of a failure in performing information transmission by using the high-frequency carrier is higher. Therefore, when the second consecutive DTX threshold is greater than the first consecutive DTX threshold, reliability of performing information transmission by using the high-frequency carrier can be improved.

When the first carrier group includes the licensed spectrum carrier, and the second carrier group includes the unlicensed spectrum carrier, and when information transmission is performed by using the unlicensed spectrum carrier, a probability of sent resource collision is higher, and a quantity of information transmission failures is greater. Therefore, when the second consecutive DTX threshold is greater than the first consecutive DTX threshold, reliability of performing information transmission by using the unlicensed spectrum carrier can be improved.

With reference to the first aspect, in some implementations of the first aspect, the first carrier group includes a primary carrier, and the second carrier group includes a secondary carrier.

With reference to the first aspect, in some implementations of the first aspect, that the first terminal stops performing information transmission by using the first carrier group if a quantity of times that the first terminal consecutively fails to detect a first HARQ feedback message corresponding to the first information is greater than or equal to the first consecutive DTX threshold includes: The first terminal stops performing information transmission by using the first carrier group and the second carrier group if the quantity of times that the first terminal consecutively fails to detect the first HARQ feedback message corresponding to the first information is greater than or equal to the first consecutive DTX threshold.

When the first carrier group includes the primary carrier, and the second carrier group includes the secondary carrier, because the primary carrier is used to send control signaling and data, and the secondary carrier is used to send data, a PSSCH resource for sending data by using the secondary carrier needs to be scheduled by using the primary carrier. If information transmission is stopped to be performed by using the primary carrier group, information transmission cannot be performed by using the secondary carrier.

With reference to the first aspect, in some implementations of the first aspect, the method further includes: The first terminal releases the unicast connection between the first terminal and the second terminal if the quantity of times that the first terminal consecutively fails to detect the first HARQ feedback message corresponding to the first information is greater than or equal to the first consecutive DTX threshold.

With reference to the first aspect, in some implementations of the first aspect, the method further includes: The first terminal sends first indication information to the network device if the quantity of times that the first terminal consecutively fails to detect the first HARQ feedback message corresponding to the first information is greater than or equal to the first consecutive DTX threshold, where the first indication information indicates that the first carrier group is invalid. Optionally, the first terminal sends second indication information to the second terminal if the quantity of times that the first terminal consecutively fails to detect the first HARQ feedback message corresponding to the first information is greater than or equal to the first consecutive DTX threshold, where the second indication information indicates that the first carrier group is invalid. With reference to the first aspect, in some implementations of the first aspect, the method further includes: The first terminal sends first indication information to the network device if the quantity of times that the first terminal consecutively fails to detect the second HARQ feedback message corresponding to the second information is greater than or equal to the second consecutive DTX threshold, where the first indication information indicates that the second carrier group is invalid. Optionally, the first terminal sends second indication information to the second terminal if the quantity of times that the first terminal consecutively fails to detect the second HARQ feedback message corresponding to the second information is greater than or equal to the second consecutive DTX threshold, where the second indication information indicates that the second carrier group is invalid.

With reference to the first aspect, in some implementations of the first aspect, the method further includes: The first terminal sends first indication information to the network device if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold, where the first indication information indicates that the first carrier group and the second carrier group are invalid. Optionally, the first terminal sends second indication information to the second terminal if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold, where the second indication information indicates that the first carrier group and the second carrier group are invalid.

With reference to the first aspect, in some implementations of the first aspect, the configuration information further includes a third consecutive DTX threshold and a fourth consecutive DTX threshold, the third consecutive DTX threshold is associated with a third carrier group, and the fourth consecutive DTX threshold is associated with a fourth carrier group. The method further includes: The first terminal sends third information to the second terminal by using a carrier in the third carrier group; the first terminal sends fourth information to the second terminal by using a carrier in the fourth carrier group; and the first terminal stops performing information transmission by using the third carrier group if a quantity of times that the first terminal consecutively fails to detect a third HARQ feedback message corresponding to the third information is greater than or equal to the third consecutive DTX threshold; and/or the first terminal stops performing information transmission by using the fourth carrier group if a quantity of times that the first terminal consecutively fails to detect a fourth HARQ feedback message corresponding to the fourth information is greater than or equal to the fourth consecutive DTX threshold.

Based on the foregoing technical solution, the first terminal records the quantity of times that the first HARQ feedback message is consecutively not detected in a process of sending the first information to the second terminal by using the carrier in the first carrier group, records the quantity of times that the second HARQ feedback message is consecutively not detected in a process of sending the second information to the second terminal by using the carrier in the second carrier group, records the quantity of times that the third HARQ feedback message is consecutively not detected in a process of sending the third information to the second terminal by using the carrier in the third carrier group, and records the quantity of times that the fourth HARQ feedback message is consecutively not detected in a process of sending the fourth information to the second terminal by using the carrier in the fourth carrier group. The first terminal stops performing information transmission by using the first carrier group if the quantity of times that the first terminal consecutively fails to detect the first HARQ feedback message corresponding to the first information is greater than or equal to the first consecutive DTX threshold. The first terminal stops performing information transmission by using the second carrier group if the quantity of times that the first terminal consecutively fails to detect the second HARQ feedback message corresponding to the second information is greater than or equal to the second consecutive DTX threshold. The first terminal stops performing information transmission by using the third carrier group if the quantity of times that the first terminal consecutively fails to detect the third HARQ feedback message corresponding to the third information is greater than or equal to the third consecutive DTX threshold. The first terminal stops performing information transmission by using the fourth carrier group if the quantity of times that the first terminal consecutively fails to detect the fourth HARQ feedback message corresponding to the fourth information is greater than or equal to the fourth consecutive DTX threshold. Compared with a solution in which one numConsecutiveDTX is recorded and one consecutive DTX threshold is configured for all carriers, the technical solution in this embodiment of this application can improve reliability of information transmission on the sidelink.

With reference to the first aspect, in some implementations of the first aspect, the method further includes: The first terminal releases a unicast connection between the first terminal and the second terminal if the quantity of times that the first terminal consecutively fails to detect the first HARQ feedback message corresponding to the first information is greater than or equal to the first consecutive DTX threshold, the quantity of times that the first terminal consecutively fails to detect the second HARQ feedback message corresponding to the second information is greater than or equal to the second consecutive DTX threshold, the quantity of times that the first terminal consecutively fails to detect the third HARQ feedback message corresponding to the third information is greater than or equal to the third consecutive DTX threshold, and the quantity of times that the first terminal consecutively fails to detect the fourth HARQ feedback message corresponding to the fourth information is greater than or equal to the fourth consecutive DTX threshold.

With reference to the first aspect, in some implementations of the first aspect, the first carrier group and the second carrier group include a licensed spectrum carrier, the third carrier group and the fourth carrier group include an unlicensed spectrum carrier, the first carrier group and the third carrier group include a low-frequency carrier, and the second carrier group and the fourth carrier group include a high-frequency carrier.

According to a second aspect, a communication apparatus is provided. The apparatus may be used in the first terminal according to the first aspect. The apparatus performs unicast communication with a second terminal over a sidelink. The apparatus includes: a transceiver unit, configured to receive configuration information from a network device, where the configuration information includes a first consecutive discontinuous transmission DTX threshold and a second consecutive DTX threshold, the first consecutive DTX threshold is associated with a first carrier group, and the second consecutive DTX threshold is associated with a second carrier group; the transceiver unit is further configured to send first information to the second terminal by using a carrier in the first carrier group; and the transceiver unit is further configured to send second information to the second terminal by using a carrier in the second carrier group; and a processing unit, configured to: stop performing information transmission by using the first carrier group if a quantity of times that the apparatus consecutively fails to detect a first hybrid automatic repeat request HARQ feedback message corresponding to the first information is greater than or equal to the first consecutive DTX threshold; and/or stop performing information transmission by using the second carrier group if a quantity of times that the apparatus consecutively fails to detect a second HARQ feedback message corresponding to the second information is greater than or equal to the second consecutive DTX threshold.

With reference to the second aspect, in some implementations of the second aspect, the processing unit is further configured to release a unicast connection between the apparatus and the second terminal if the quantity of times that the apparatus consecutively fails to detect the first HARQ feedback message corresponding to the first information is greater than or equal to the first consecutive DTX threshold and the quantity of times that the apparatus consecutively fails to detect the second HARQ feedback message corresponding to the second information is greater than or equal to the second consecutive DTX threshold.

With reference to the second aspect, in some implementations of the second aspect, the first carrier group includes a low-frequency carrier, and the second carrier group includes a high-frequency carrier; or the first carrier group includes a licensed spectrum carrier, and the second carrier group includes an unlicensed spectrum carrier.

With reference to the second aspect, in some implementations of the second aspect, the second consecutive DTX threshold is greater than the first consecutive DTX threshold.

With reference to the second aspect, in some implementations of the second aspect, the first carrier group includes a primary carrier, and the second carrier group includes a secondary carrier.

With reference to the second aspect, in some implementations of the second aspect, the processing unit is specifically configured to stop performing information transmission by using the first carrier group and the second carrier group if the quantity of times that the apparatus consecutively fails to detect the first HARQ feedback message corresponding to the first information is greater than or equal to the first consecutive DTX threshold.

With reference to the second aspect, in some implementations of the second aspect, the processing unit is further configured to release the unicast connection between the apparatus and the second terminal if the quantity of times that the apparatus consecutively fails to detect the first HARQ feedback message corresponding to the first information is greater than or equal to the first consecutive DTX threshold.

With reference to the second aspect, in some implementations of the second aspect, the configuration information further includes a third consecutive DTX threshold and a fourth consecutive DTX threshold, the third consecutive DTX threshold is associated with a third carrier group, and the fourth consecutive DTX threshold is associated with a fourth carrier group; the transceiver unit is further configured to send third information to the second terminal by using a carrier in the third carrier group; the transceiver unit is further configured to send fourth information to the second terminal by using a carrier in the fourth carrier group; and the processing unit is further configured to: stop performing information transmission by using the third carrier group if a quantity of times that a third HARQ feedback message corresponding to the third information is consecutively not detected is greater than or equal to the third consecutive DTX threshold; and/or stop performing information transmission by using the fourth carrier group if a quantity of times that a fourth HARQ feedback message corresponding to the fourth information is consecutively not detected is greater than or equal to the fourth consecutive DTX threshold. With reference to the second aspect, in some implementations of the second aspect, the processing unit is further configured to release a unicast connection between the apparatus and the second terminal if the quantity of times that the apparatus consecutively fails to detect the first HARQ feedback message corresponding to the first information is greater than or equal to the first consecutive DTX threshold, the quantity of times that the apparatus consecutively fails to detect the second HARQ feedback message corresponding to the second information is greater than or equal to the second consecutive DTX threshold, the quantity of times that the apparatus consecutively fails to detect the third HARQ feedback message corresponding to the third information is greater than or equal to the third consecutive DTX threshold, and the quantity of times that the apparatus consecutively fails to detect the fourth HARQ feedback message corresponding to the fourth information is greater than or equal to the fourth consecutive DTX threshold.

With reference to the second aspect, in some implementations of the second aspect, the first carrier group and the second carrier group include a licensed spectrum carrier, the third carrier group and the fourth carrier group include an unlicensed spectrum carrier, the first carrier group and the third carrier group include a low-frequency carrier, and the second carrier group and the fourth carrier group include a high-frequency carrier.

According to a third aspect, a communication apparatus is provided, including a processor and a memory. The memory is configured to store a computer program. The processor is configured to execute the computer program stored in the memory, to enable the communication apparatus to perform the method according to any one of the first aspect or the possible implementations of the first aspect.

According to a fourth aspect, a communication system is provided, including the first terminal, the second terminal, and the network device in the method in the first aspect.

According to a fifth aspect, a computer-readable storage medium is provided. The computer-readable medium stores a computer program. When the computer program is run on a computer, the computer is enabled to perform the method according to any possible implementation of the first aspect.

According to a sixth aspect, a computer program product is provided, including a computer program. When the computer program is executed by a computer, a communication apparatus is enabled to implement the method in any possible implementation of the first aspect.

The solutions provided in the second aspect to the sixth aspect are used to implement or cooperatively implement the method provided in the first aspect, and therefore can achieve beneficial effect the same as or corresponding to those in the first aspect. Details are not described herein again.

### BRIEF DESCRIPTION OF DRAWINGS

FIG. 1 is a diagram of direct communication between terminals through a PC5 interface;
FIG. 2 is a schematic interaction flowchart of performing uplink transmission based on an unlicensed spectrum;
FIG. 3 is a diagram of a relationship between a PSSCH and a PSFCH in time domain;
FIG. 4 is a schematic interaction flowchart of PSFCH transmission in which communication is performed by using an SL unlicensed spectrum;
FIG. 5 is a flowchart of triggering an SL RLF;
FIG. 6 is a diagram of a system architecture to which embodiments of this application are applicable;
FIG. 7 is a schematic interaction flowchart of an information transmission method according to an embodiment of this application;
FIG. 8 is a schematic interaction flowchart of an example of an information transmission method according to an embodiment of this application;
FIG. 9 is a schematic interaction flowchart of an example of an information transmission method according to an embodiment of this application;
FIG. 10 is a schematic interaction flowchart of an example of an information transmission method according to an embodiment of this application;
FIG. 11 is a schematic interaction flowchart of an example of an information transmission method according to an embodiment of this application;
FIG. 12 is a block diagram of a communication apparatus according to an embodiment of this application; and
FIG. 13 is a block diagram of another communication apparatus according to an embodiment of this application.

### DESCRIPTION OF EMBODIMENTS

The following describes technical solutions of this application with reference to accompanying drawings.

Embodiments of this application may be applied to various communication systems, for example, a sidelink communication (sidelink communication) system, a vehicle-to-everything (vehicle-to-everything, V2X) system, a wireless local area network (wireless local area network, WLAN) system, a narrowband internet of things (narrowband internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, a satellite communication system, a 5^{th} generation (5^{th} generation, 5G) system, a 6^{th} generation (6^{th} generation, 6G) system, a communication system on a licensed spectrum, a communication system on an unlicensed spectrum, or a new communication system that will emerge in the future.

The terminal device in embodiments of this application may be a device, a chip, or a module that includes a wireless transceiver function and that can provide a communication service for a user. Specifically, the terminal device may be a device in a vehicle-to-everything (vehicle-to-everything, V2X) system, a device in a device-to-device (device-to-device, D2D) system, a device in a machine type communication (machine type communication, MTC) system, a device in sidelink communication, or the like. The terminal device may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), a user equipment (user equipment, UE), a cellular phone (cellular phone), a cordless phone, a session initiation protocol (session initiation protocol, SIP) phone, a wireless local loop (wireless local loop, WLL) station, a smartphone (smartphone), a wireless data card, a personal digital assistant (personal digital assistant, PDA) computer, a tablet computer, a wireless modem (modem), a handheld (handset) device, a laptop computer (laptop computer), or a machine type communication (machine type communication, MTC) terminal, a terminal device in a 5G network or a network after 5G, a terminal device in a future evolved public land mobile network (public land mobile network, PLMN), a chip, a device, or a module that has an extended reality (extended reality, XR) function or a virtual reality (virtual reality, VR) function, or the like. This is not limited in this application. A network device in embodiments of this application is mainly a base station, and is also referred to as a wireless access point, a transceiver station, a relay station, a cell, a transceiver point, an evolved base station, a next-generation base station, a road site unit (road site unit, RSU), or the like. This is not limited in embodiments of this application.

In a wireless communication system, data communication between terminals may be performed via a network device, or communication between terminals may be directly performed without using a network device. An interface between terminals is referred to as a PC5 interface, and is similar to a Uu interface between a terminal and a base station. A link between terminals is referred to as a sidelink, and a typical application scenario of SL communication is V2X. In V2X, each vehicle is a terminal, and data transmission may be directly performed between terminals over the sidelink without using the network device. This can effectively reduce a communication delay.

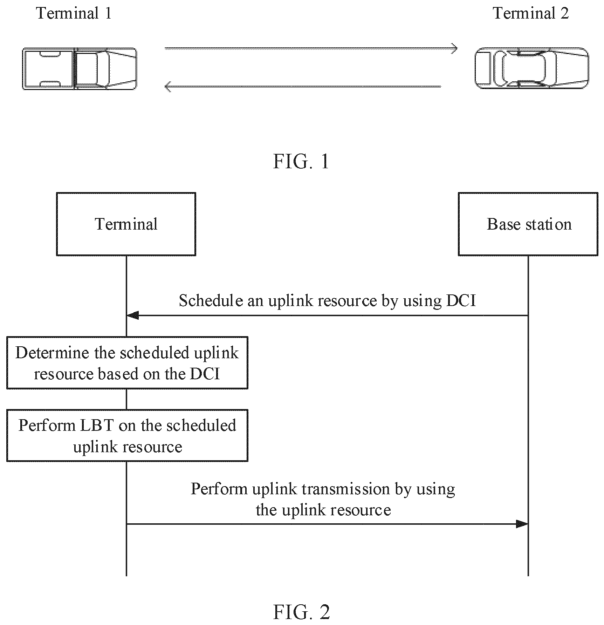

FIG. 1 is a diagram of direct communication between terminals through a PC5 interface.

The sidelink supports unicast communication, multicast communication, and broadcast communication. Embodiments of this application relate to unicast communication.

To facilitate understanding of embodiments of this application, the technical solutions related to embodiments of this application are briefly described.

### (1) Unicast communication

Unicast communication is similar to data communication performed after a radio resource control (radio resource control, RRC) connection is established between a terminal and a base station, and a unicast connection needs to be first established between two terminals. After the unicast connection is established between the two terminals, the two terminals may perform data communication based on a negotiated identifier. Data may be encrypted, or may not be encrypted. In unicast communication, unicast communication can be performed only between the two terminals that have established the unicast connection.

In unicast communication, when sending data, a sending terminal sends a source identifier and a destination identifier together to a receiving terminal, where the source identifier is allocated by the sending terminal, and the destination identifier is an identifier allocated by the receiving terminal for a unicast connection.

Both unicast communication and multicast communication on a sidelink support HARQ feedback, and the HARQ feedback is fed back by the receiving terminal on a physical sidelink feedback channel (physical sidelink feedback channel, PSFCH). A HARQ feedback manner in unicast communication is: The sending terminal sends data to the receiving terminal; and if the receiving terminal successfully decodes the data, the receiving terminal feeds back an acknowledgment (acknowledgement, ACK) message to the sending terminal; or if the receiving terminal fails to decode the data, the receiving terminal feeds back a negative acknowledgment (negative acknowledgement, NACK) message to the sending terminal.

### (2) Sidelink control information (sidelink control information, SCI) format

In NR sidelink communication, SCI includes first-stage SCI (first-stage SCI) and second-stage SCI (second-stage SCI). The first-stage SCI is carried on a physical sidelink control channel (physical sidelink control channel, PSCCH), and the second-stage SCI is carried on a physical sidelink shared channel (physical sidelink shared channel, PSSCH). The first-stage SCI indicates a time-frequency domain resource of the PSSCH, and the second-stage SCI indicates whether HARQ feedback supports "enabled" or "disabled". That the HARQ feedback supports "enabled" may be understood as that a receiving terminal needs to send a feedback message to a sending terminal. That the HARQ feedback supports "disabled" may be understood as that the receiving terminal does not need to send the feedback message. In embodiments of this application, the second-stage SCI indicates that the HARQ feedback supports "enabled".

### (3) Unlicensed spectrum and listen-before-talk (listen-before-talk, LBT) technology

Spectrum resources used by a terminal are classified into a licensed spectrum and an unlicensed spectrum. The licensed spectrum can be used only by some organizations or operators. The unlicensed spectrum is a shared spectrum and can be used by different operators/organizations. To ensure fairness of using the unlicensed spectrum, a terminal and a network device need to perform an LBT procedure before sending data. The LBT procedure may be understood as a channel access procedure.

Generally, LBT is performed at a granularity of a channel, for example, a channel with a bandwidth of 20 MHz. Before sending a signal (a data signal) on a first channel, a communication device may first detect whether the first channel is idle, for example, whether it is detected that a nearby communication device is occupying the first channel to send a signal. This detection procedure may be referred to as a clear channel assessment (clear channel assessment, CCA) procedure or a channel access procedure. Specifically, the channel access procedure includes a first-type channel access procedure and a second-type channel access procedure. The communication device in embodiments of this application may be a terminal, or may be a network device.

The first-type channel access procedure may be referred to as a fixed duration-based channel access procedure. For a specific bandwidth, the communication device performs energy detection on a received signal within fixed duration. If energy of the received signal is less than or equal to a first preset threshold, it is considered that the channel is idle, and the communication device may perform data transmission by using the idle channel. Otherwise, the communication device considers that the channel is busy, and the communication device does not perform data transmission by using the busy channel.

The second-type channel access procedure may be referred to as a fallback-based channel access procedure. For a specific bandwidth, a window is defined. The window defines a value range of a quantity of slots for performing energy detection on a received signal. The communication device randomly selects a value A from the value range. After determining, through energy detection, that at least A slots are idle, the communication device considers that the channel is idle, so that the communication device may perform data transmission by using the idle channel. Otherwise, the communication device considers that the channel is busy, and the communication device does not perform data transmission by using the busy channel. Specifically, if energy of a signal received by the communication device within fixed duration in each of the at least A slots is less than or equal to a second preset threshold, the communication device considers that the channel is idle. The first preset threshold and the second preset threshold may be predefined. There is no limitation relationship between the first preset threshold and the second preset threshold. The first preset threshold and the second preset threshold may be the same or may be different. This is not limited in embodiments of this application.

When the channel access procedure is performed, two results may be obtained: The channel access procedure is completed and the channel access procedure is not completed. The channel access procedure being completed may be referred to as an LBT success, and the channel access procedure being not completed may be referred to as an LBT failure. There are a plurality of time-domain start locations in a time-frequency resource for data transmission. If the channel is determined to be idle before any time-domain start location, it may be considered that the channel access procedure is completed. If the channel is determined to be busy before all the time-domain start locations, it may be considered that the channel access procedure is not completed.

In conclusion, in a scenario of operating based on the licensed spectrum, after a base station schedules an uplink resource for the terminal, the terminal may directly perform uplink transmission by using the uplink resource; but in a scenario of operating based on the unlicensed spectrum, after a base station schedules an uplink resource for the terminal, the terminal needs to perform LBT on the uplink resource, and can perform uplink transmission by using the uplink resource only after the LBT succeeds. FIG. 2 is a schematic interaction flowchart of performing uplink transmission based on an unlicensed spectrum. It should be understood that, if the terminal performs LBT on the uplink resource, and an LBT failure occurs, the uplink resource cannot be used.

### (4) Carrier aggregation (carrier aggregation, CA)

To further improve spectral efficiency and a user throughput of a communication system, an LTE-advanced (LTE-advanced, LTE-A) standard is formulated, where carrier aggregation is introduced into LTE-A as a new technology. The carrier aggregation means that a terminal may perform uplink and downlink communication by simultaneously using a plurality of cells (carriers), thereby supporting high-speed data transmission. In the plurality of cells, one cell is a primary cell (primary cell, PCell), and the other cells are secondary cells (secondary cell, SCell).

In a scenario in which the terminal communicates with a base station, used spectrum resources may also be classified into a low-frequency (FR1) spectrum and a high-frequency (FR2) spectrum. Different from a low-frequency signal, a high-frequency signal is characterized by a high frequency, fast attenuation, and limited coverage. The base station may aggregate transmitted energy to one direction by using a narrow beam method, to increase a transmission distance, and the base station also expands a sending direction by using a time division scanning method. High-frequency carriers may be further classified into two types of carriers: FR2-1 and FR2-2. Specifically, the FR2-2 carrier is on a higher frequency band than the FR2-1 carrier.

In carrier aggregation, carriers may be classified into a primary carrier and a secondary carrier based on functions of different carriers. For example, the primary carrier is used to send control signaling and data, for example, a PC5-RRC message and SCI signaling; and the secondary carrier is mainly used to send data.

In terms of spectrum management and control, spectrums may be classified into a licensed spectrum and an unlicensed spectrum.

### (5) Obtaining of an SL resource

A terminal obtains an SL resource in two manners, and the two manners are respectively referred to as a mode 1 (mode 1) and a mode 2 (mode 2). When operating in the mode 1, the terminal obtains the SL resource from a base station. Specifically, the base station may schedule the SL resource for the terminal by using downlink control information (downlink control information, DCI), or configure an SL configured grant (configured grant) for the terminal by using an RRC message. When operating in the mode 2, the terminal may receive configuration information of an SL resource pool from a base station, or obtain configuration information of an SL resource pool from a pre-configuration, and then select the SL resource from the SL resource pool for sending. Specifically, the terminal may randomly select the SL resource from the SL resource pool, or select the SL resource based on a result of sensing (sensing) or partial sensing (partial sensing).

### (6) SL transmission and HARQ feedback

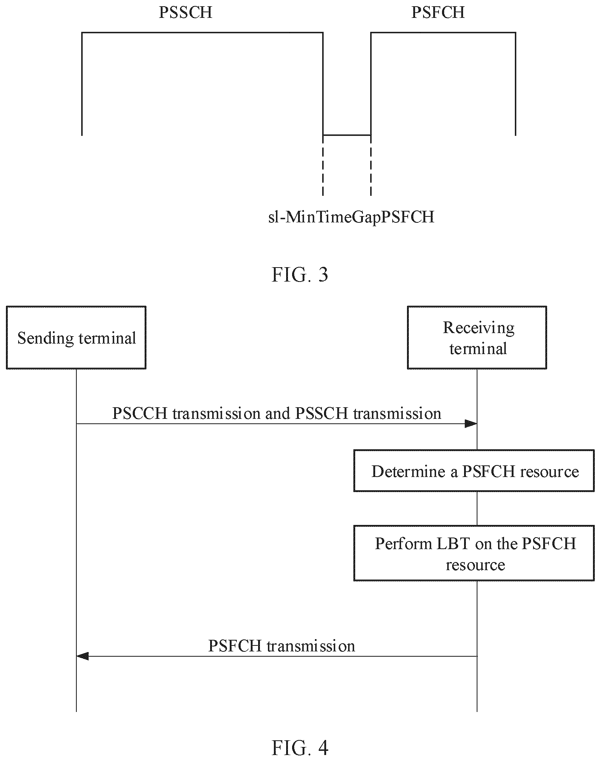

An SL resource grant (SL grant) may be obtained through scheduling of a base station or selected by a terminal from a configured resource pool. The SL grant is used to determine a group of PSCCH time-domain (duration) resources and a group of PSSCH duration resources. For a PSFCH resource, the terminal does not need to obtain the SL grant in advance. Specifically, the PSFCH resource is obtained through mapping by a sending terminal based on a resource location of a PSSCH. Specifically, the sending terminal starts to perform PSFCH transmission in a 1^{st} slot that includes the PSFCH resource and that is sl-MinTimeGapPSFCH later than a last slot (slot) of the PSSCH. FIG. 3 is a diagram of a relationship between a PSSCH and a PSFCH in time domain. sl-MinTimeGapPSFCH is configured in a resource pool, and may be specifically two slots or three slots.

FIG. 4 is a schematic interaction flowchart of PSFCH transmission in which communication is performed by using an SL unlicensed spectrum. After a sending terminal sends a PSCCH and a PSSCH to a receiving terminal, the receiving terminal determines a PSFCH resource based on a location of the PSSCH resource and sl-MinTimeGapPSFCH configured in the resource pool, and further needs to perform LBT on the PSFCH resource. After the LBT succeeds, the receiving terminal sends a HARQ feedback message to the sending terminal on the PSFCH resource. Correspondingly, the sending terminal also receives the HARQ feedback message on a corresponding PSFCH resource.

Currently, in a HARQ-based SL RLF detection mechanism, when a sending terminal detects a plurality of times of consecutive DTX for a unicast connection, an SL RLF of the unicast connection is triggered. It may be understood that, when the sending terminal does not receive a corresponding HARQ feedback message on a PSFCH receiving opportunity a plurality of consecutive times, the SL RLF of the unicast connection is triggered.

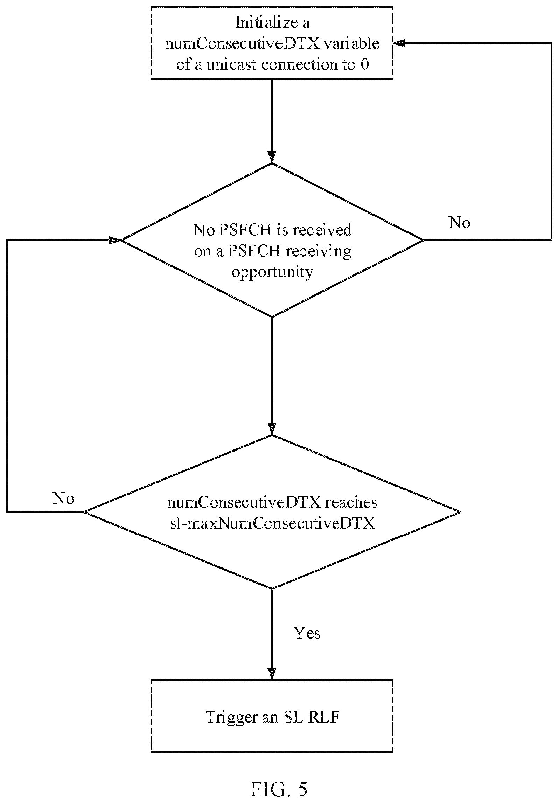

FIG. 5 is a flowchart of triggering the SL RLF. First, sl-maxNumConsecutiveDTX is configured for a terminal to control HARQ feedback-based SL RLF detection, and the terminal maintains a counter for recording a variable being a quantity of consecutive DTXs (numConsecutiveDTX) for each unicast connection/PCS-RRC connection. When the unicast connection is established or sl-maxNumConsecutiveDTX is configured/reconfigured, an SL HARQ entity initializes the variable numConsecutiveDTX of each unicast connection to 0.

For each PSFCH receiving opportunity, if the SL HARQ entity does not receive the HARQ feedback message on the PSFCH receiving opportunity, the SL HARQ entity considers that PSFCH reception is missing and increases numConsecutiveDTX by 1; and if numConsecutiveDTX reaches sl-maxNumConsecutiveDTX, the SL HARQ entity indicates the RLF to an RRC layer. If HARQ feedback is received on the PSFCH receiving opportunity, numConsecutiveDTX is re-initialized to 0.

Specifically, when the sending terminal does not receive a corresponding HARQ feedback message on a PSFCH receiving opportunity, one time of SL DTX is recorded. If the SL RLF is triggered by a plurality of times of consecutive SL DTX, the sending terminal considers that link quality is poor, for example, a distance between a transmit terminal and a receiving terminal exceeds a communication distance. According to an R16 TS38.321 protocol, for a PC5-RRC connection, the sending terminal uses a HARQ entity to maintain a numConsecutiveDTX/DTX counter. When one time of SL DTX occurs on the PSFCH receiving opportunity, the numConsecutiveDTX/DTX counter is increased by 1. When numConsecutiveDTX is greater than or equal to a maximum consecutive DTX threshold, an RLF on the PC5-RRC connection is triggered. Triggering the RLF on the PC5-RRC connection may be understood as releasing a PC5-RRC connection between the sending terminal and the receiving terminal.

A manner in which the sending terminal maintains a consecutive DTX count for the unicast connection, and determines the RLF with reference to a configured consecutive DTX threshold sl-maxNumConsecutiveDTX has the following disadvantages:
(1) SL carriers may be classified into an FR1 carrier and an FR2 carrier. The FR1 carrier and the FR2 carrier correspond to different effective communication distances. The terminal maintains a consecutive DTX count for each unicast connection, and communication link statuses of the FR1 carrier and the FR2 carrier cannot be distinguished. For example, if a plurality of times of consecutive DTX counts occur on a frequency band of the FR2 carrier, an RLF on a unicast connection between two terminals is triggered. Actually, the communication link status of the FR1 carrier is good, but the sending terminal can no longer send data on the FR1 carrier because the communication link status of the FR2 carrier is poor.
(2) SL carriers may be classified into a licensed carrier and an unlicensed carrier. Different from the licensed carrier, more DTX occurs on the unlicensed carrier due to an LBT failure. The terminal maintains a consecutive DTX count for each unicast connection, and communication link statuses of the licensed carrier and the unlicensed carrier cannot be distinguished. For example, if a plurality of times of consecutive DTX counts occur on a frequency band of the unlicensed carrier, an RLF on a unicast connection between two terminals is triggered. Actually, the communication link status of the licensed carrier is good, but the sending terminal can no longer send data on the licensed carrier because the communication link status of the unlicensed carrier is poor.
(3) SL carriers may be classified into a primary carrier and a secondary carrier. Different from the secondary carrier, the primary carrier usually carries control signaling and the like of SL communication. When a communication link status of the primary carrier is poor and consequently a plurality of times of consecutive DTX occurs, sending of the control signaling is affected, and data sending and receiving on the secondary carrier are also affected or even stopped. Otherwise, a communication link status of the secondary carrier does not affect sending and receiving of the control signaling on the primary carrier. The terminal maintains a consecutive DTX count for each unicast connection, and communication link statuses of the primary carrier and the secondary carrier cannot be distinguished. For example, if a plurality of times of consecutive DTX counts occur on a frequency band of the secondary carrier, an RLF on a unicast connection between two terminals is triggered. Actually, the communication link status of the primary carrier is good, but the sending terminal can no longer send data on the primary carrier because the communication link status of the secondary carrier is poor.

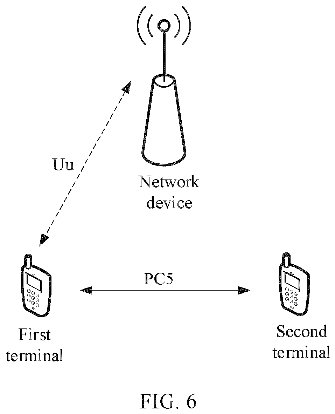

FIG. 6 is a diagram of a system architecture to which embodiments of this application are applicable. Embodiments of this application are applicable to a sidelink communication scenario. A first terminal and a second terminal may communicate with each other by using a licensed carrier and an unlicensed carrier, or may communicate with each other by using a low-frequency carrier and a high-frequency carrier, or may communicate with each other by using a primary carrier and a secondary carrier. A data sending terminal (the first terminal) that performs sidelink communication may operate in a mode 1, or may operate in a mode 2. A communication mode between the sending terminal and a receiving terminal (the second terminal) is unicast communication.

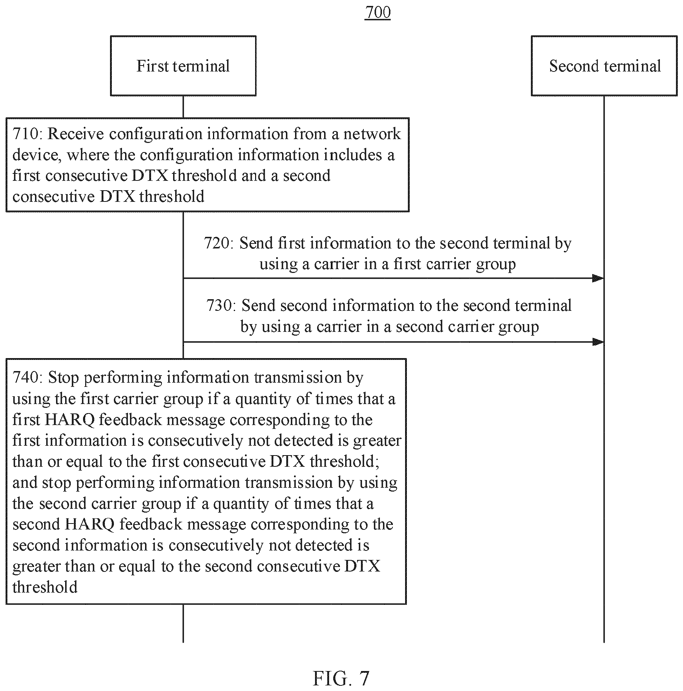

Embodiments of this application provide an information transmission method, to improve reliability of information transmission on a sidelink. FIG. 7 is a schematic interaction flowchart of an information transmission method 700 according to an embodiment of this application. This embodiment of this application is applicable to unicast communication between a first terminal and a second terminal over a sidelink. A network device in this embodiment may be a base station, the first terminal may be referred to as a sending terminal, and the second terminal may be referred to as a receiving terminal.

710: The network device sends configuration information to the first terminal, and correspondingly, the first terminal receives the configuration information from the network device, where the configuration information includes a first consecutive DTX threshold and a second consecutive DTX threshold, the first consecutive DTX threshold is associated with a first carrier group, and the second consecutive DTX threshold is associated with a second carrier group. Optionally, the configuration information includes system information block (system information block, SIB) information.

That the first terminal records a value of first numConsecutiveDTX corresponding to the first carrier group and a value of second numConsecutiveDTX corresponding to the second carrier group may be understood as that the first terminal maintains two consecutive DTX counters. Initial values of the first numConsecutiveDTX corresponding to the first carrier group and the second numConsecutiveDTX corresponding to the second carrier group are 0. The first terminal stops performing information transmission by using the first carrier group if the value of the first numConsecutiveDTX recorded by the first terminal is greater than or equal to the first consecutive DTX threshold. The first terminal stops performing information transmission by using the second carrier group if the value of the second numConsecutiveDTX recorded by the first terminal is greater than or equal to the second consecutive DTX threshold.

The first consecutive DTX threshold is different from the second consecutive DTX threshold. This is not limited in this embodiment of this application.

720: The first terminal sends first information to the second terminal by using a carrier in the first carrier group. Correspondingly, the second terminal receives the first information from the first terminal; and if the first information from the first terminal is received by the second terminal, the second terminal sends a first HARQ feedback message corresponding to the first information to the first terminal; or if the first information from the first terminal is not received by the second terminal, the second terminal does not send a first HARQ feedback message. After the first terminal sends the first information to the second terminal, the first terminal detects the first HARQ feedback message corresponding to the first information. For example, the first information includes first data.

That the first terminal sends the first information to the second terminal by using the carrier in the first carrier group may be understood as that the first terminal sends a plurality of pieces of first information to the second terminal by using a plurality of carriers in the first carrier group.

Specifically, the first terminal sends the first information to the second terminal on a PSSCH by using the carrier in the first carrier group. Correspondingly, the second terminal receives the first information from the first terminal on the PSSCH; and if the first information is received by the second terminal, the second terminal determines a PSFCH based on the PSSCH and sends the first HARQ feedback message to the first device on the PSFCH; or if the first information is not received by the second terminal, the second terminal does not send the first HARQ feedback message. After the first terminal sends the first information to the second terminal, the first terminal detects the first HARQ feedback message corresponding to the first information on the PSFCH.

For example, after the first terminal sends a 1^{st} piece of first information to the second terminal by using a carrier in the first carrier group, if no first HARQ feedback message corresponding to the 1^{st} piece of first information is detected, the first terminal increases the first numConsecutiveDTX by 1. After the first terminal sends a 2^{nd} piece of first information to the second terminal by using a carrier in the first carrier group, if a first HARQ feedback message corresponding to the 2^{nd} piece of first information is detected, the first terminal increases the first numConsecutiveDTX by 1 again; or if no first HARQ feedback message corresponding to the 2^{nd} piece of first information is detected, the first terminal re-initializes the first numConsecutiveDTX to 0.

730: The first terminal sends second information to the second terminal by using a carrier in the second carrier group. Correspondingly, the second terminal receives the second information from the first terminal; and if the second information from the first terminal is received by the second terminal, the second terminal sends a second HARQ feedback message corresponding to the second information to the first terminal; or if the second information from the first terminal is not received by the second terminal, the second terminal does not send a second HARQ feedback message. After the first terminal sends the second information to the second terminal, the first terminal detects the second HARQ feedback message corresponding to the second information. For example, the second information includes second data.

That the first terminal sends the second information to the second terminal by using the carrier in the second carrier group may be understood as that the first terminal sends a plurality of pieces of second information to the second terminal by using a plurality of carriers in the second carrier group.

Specifically, the first terminal sends the second information to the second terminal on a PSSCH by using the carrier in the second carrier group. Correspondingly, the second terminal receives the second information from the first terminal on the PSSCH; and if the second information is received by the second terminal, the second terminal determines a PSFCH based on the PSSCH and sends the second HARQ feedback message to the first device on the PSFCH; or if the second information is not received by the second terminal, the second terminal does not send the second HARQ feedback message. After the first terminal sends the second information to the second terminal, the first terminal detects the second HARQ feedback message corresponding to the second information on the PSFCH.

For example, after the first terminal sends a 1^{st} piece of second information to the second terminal by using a carrier in the second carrier group, if no second HARQ feedback message corresponding to the 1^{st} piece of second information is detected, the first terminal increases the second numConsecutiveDTX by 1. After the first terminal sends a 2^{nd} piece of second information to the second terminal by using a carrier in the second carrier group, if a second HARQ feedback message corresponding to the 2^{nd} piece of second information is detected, the first terminal increases the second numConsecutiveDTX by 1 again; or if no second HARQ feedback message corresponding to the 2^{nd} piece of second information is detected, the first terminal re-initializes the second numConsecutiveDTX to 0.

It should be understood that, step 720 and step 730 may be performed synchronously, or step 730 may be performed before step 720. This is not limited in this embodiment of this application.

740: The first terminal stops performing information transmission by using the first carrier group if a quantity of times that the first terminal consecutively fails to detect the first HARQ feedback message corresponding to the first information is greater than or equal to the first consecutive DTX threshold; and/or the first terminal stops performing information transmission by using the second carrier group if a quantity of times that the first terminal consecutively fails to detect the second HARQ feedback message corresponding to the second information is greater than or equal to the second consecutive DTX threshold. The quantity of times that the first terminal consecutively fails to detect the first HARQ feedback message corresponding to the first information may be understood as the value of the first numConsecutiveDTX recorded by the first terminal. The quantity of times that the first terminal consecutively fails to detect the second HARQ feedback message corresponding to the second information may be understood as the value of the second numConsecutiveDTX recorded by the first terminal.

For example, the first terminal stops performing information transmission by using the first carrier group if the quantity of times that the first terminal consecutively fails to detect the first HARQ feedback message corresponding to the first information is greater than or equal to the first consecutive DTX threshold. Optionally, the first terminal sends first indication information to the network device if the quantity of times that the first terminal consecutively fails to detect the first HARQ feedback message corresponding to the first information is greater than or equal to the first consecutive DTX threshold, where the first indication information indicates that the first carrier group is invalid. Optionally, the first terminal sends second indication information to the second terminal if the quantity of times that the first terminal consecutively fails to detect the first HARQ feedback message corresponding to the first information is greater than or equal to the first consecutive DTX threshold, where the second indication information indicates that the first carrier group is invalid.

For example, the first terminal stops performing information transmission by using the second carrier group if the quantity of times that the first terminal consecutively fails to detect the second HARQ feedback message corresponding to the second information is greater than or equal to the second consecutive DTX threshold. Optionally, the first terminal sends first indication information to the network device if the quantity of times that the first terminal consecutively fails to detect the second HARQ feedback message corresponding to the second information is greater than or equal to the second consecutive DTX threshold, where the first indication information indicates that the second carrier group is invalid. Optionally, the first terminal sends second indication information to the second terminal if the quantity of times that the first terminal consecutively fails to detect the second HARQ feedback message corresponding to the second information is greater than or equal to the second consecutive DTX threshold, where the second indication information indicates that the second carrier group is invalid.

For example, the first terminal stops performing information transmission by using the first carrier group and the second carrier group if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold. Optionally, the first terminal sends first indication information to the network device if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold, where the first indication information indicates that the first carrier group and the second carrier group are invalid. Optionally, the first terminal sends second indication information to the second terminal if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold, where the second indication information indicates that the first carrier group and the second carrier group are invalid.

Optionally, the first terminal releases a unicast connection/PCS-RRC connection between the first terminal and the second terminal if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold.

In the technical solution provided in this embodiment of this application, the first terminal records the quantity of times that the first HARQ feedback message is consecutively not detected in a process of sending the first information to the second terminal by using the carrier in the first carrier group, and records the quantity of times that the second HARQ feedback message is consecutively not detected in a process of sending the second information to the second terminal by using the carrier in the second carrier group. The first terminal stops performing information transmission by using the first carrier group and may continue to perform information transmission by using the second carrier group if the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is less than the second consecutive DTX threshold. The first terminal stops performing information transmission by using the second carrier group and may continue to perform information transmission by using the first carrier group if the quantity of times that the first terminal consecutively fails to detect the first HARQ feedback message corresponding to the first information is less than the first consecutive DTX threshold and the quantity of times that the first terminal consecutively fails to detect the second HARQ feedback message corresponding to the second information is greater than or equal to the second consecutive DTX threshold. Compared with a solution in which one numConsecutiveDTX is recorded and one consecutive DTX threshold is configured for all carriers, the technical solution in this embodiment of this application can improve reliability of information transmission on the sidelink.

In a specific implementation 1, the first carrier group includes a low-frequency carrier, and the second carrier group includes a high-frequency carrier. The first carrier group may be referred to as an FR1 carrier group, and the second carrier group may be referred to as an FR2 carrier group. Optionally, the second consecutive DTX threshold corresponding to the FR2 carrier group is greater than the first consecutive DTX threshold corresponding to the FR1 carrier group. A communication distance of the high-frequency carrier is short, and a probability of a failure in performing information transmission by using the high-frequency carrier is higher. Therefore, when the second consecutive DTX threshold is greater than the first consecutive DTX threshold, reliability of performing information transmission by using the high-frequency carrier can be improved.

Optionally, the FR2 carrier group may be further divided into two high-frequency carrier groups: FR2-1 and FR2-2. In this case, the first terminal maintains three consecutive DTX counters. The first terminal records a value of first numConsecutiveDTX corresponding to the FR1 carrier group, a value of second numConsecutiveDTX corresponding to the FR2-1 carrier group, and a value of third numConsecutiveDTX corresponding to the FR2-2 carrier group. The first terminal stops performing information transmission by using the FR1 carrier group if the value of the first numConsecutiveDTX recorded by the first terminal is greater than or equal to the first consecutive DTX threshold. The first terminal stops performing information transmission by using the FR2-1 carrier group if the value of the second numConsecutiveDTX recorded by the first terminal is greater than or equal to the second consecutive DTX threshold. The first terminal stops performing information transmission by using the FR2-2 carrier group if the value of the third numConsecutiveDTX recorded by the first terminal is greater than or equal to the second consecutive DTX threshold.

In a specific implementation 2, the first carrier group includes a licensed spectrum carrier, and the second carrier group includes an unlicensed spectrum carrier. The first carrier group may be referred to as a licensed spectrum carrier group, and the second carrier group may be referred to as an unlicensed spectrum carrier group.

Optionally, the second consecutive DTX threshold corresponding to the unlicensed spectrum carrier group is greater than the first consecutive DTX threshold corresponding to the licensed spectrum carrier group. When information transmission is performed by using the unlicensed spectrum carrier, a probability of resource collision is higher, and a quantity of information transmission failures is greater. Therefore, when the second consecutive DTX threshold is greater than the first consecutive DTX threshold, reliability of performing information transmission by using the unlicensed spectrum carrier can be improved.

In a specific implementation 3, the first carrier group includes a primary carrier, and the second carrier group includes a secondary carrier. The first carrier group may be referred to as a primary carrier group, and the second carrier group may be referred to as a secondary carrier group. The primary carrier group includes one carrier, and the secondary carrier group includes one or more carriers.

Optionally, after the first terminal sends the first information to the second terminal by using the carrier in the first carrier group, if the quantity of times that the first terminal consecutively fails to detect the first HARQ feedback message corresponding to the first information is greater than or equal to the first consecutive DTX threshold, the first terminal stops performing information transmission by using the first carrier group and the second carrier group. It may be understood that, after the first terminal sends the first information to the second terminal by using the primary carrier, if the quantity of times that the first terminal consecutively fails to detect the first HARQ feedback message corresponding to the first information is greater than or equal to the first consecutive DTX threshold, the first terminal stops performing information transmission by using the primary carrier group and the secondary carrier group. Because the primary carrier is used to send control signaling and data, and the secondary carrier is used to send data, a PSSCH resource for sending data by using the secondary carrier needs to be scheduled by using the primary carrier. If information transmission is stopped to be performed by using the primary carrier group, information transmission cannot be performed by using the secondary carrier.

Optionally, after the first terminal sends the first information to the second terminal by using the carrier in the first carrier group, if the quantity of times that the first terminal consecutively fails to detect the first HARQ feedback message corresponding to the first information is greater than or equal to the first consecutive DTX threshold, the first terminal releases the unicast connection between the first terminal and the second terminal.

Optionally, the configuration information sent by the network device to the first terminal further includes a third consecutive DTX threshold and a fourth consecutive DTX threshold, the third consecutive DTX threshold is associated with a third carrier group, and the fourth consecutive DTX threshold is associated with a fourth carrier group.

The first terminal records the first numConsecutiveDTX corresponding to the first carrier group and the second numConsecutiveDTX corresponding to the second carrier group, and also records third numConsecutiveDTX corresponding to the third carrier group and fourth numConsecutiveDTX corresponding to the fourth carrier group. It may be understood that the first terminal maintains four consecutive DTX counters. Initial values of the third numConsecutiveDTX and the fourth numConsecutiveDTX are also 0. The first terminal stops performing information transmission by using the first carrier group if the value of the first numConsecutiveDTX recorded by the first terminal is greater than or equal to the first consecutive DTX threshold. The first terminal stops performing information transmission by using the second carrier group if the value of the second numConsecutiveDTX recorded by the first terminal is greater than or equal to the second consecutive DTX threshold. The first terminal stops performing information transmission by using the third carrier group if a value of the third numConsecutiveDTX recorded by the first terminal is greater than or equal to the third consecutive DTX threshold. The first terminal stops performing information transmission by using the fourth carrier group if a value of the fourth numConsecutiveDTX recorded by the first terminal is greater than or equal to the fourth consecutive DTX threshold. Compared with a solution in which one numConsecutiveDTX is recorded and one consecutive DTX threshold is configured for all carriers, the technical solution in this embodiment of this application can improve reliability of information transmission on the sidelink.

Optionally, the first consecutive DTX threshold, the second consecutive DTX threshold, the third consecutive DTX threshold, and the fourth consecutive DTX threshold may be the same or may be different. This is not limited in this embodiment of this application.

Optionally, the first terminal sends third information to the second terminal by using a carrier in the third carrier group. Correspondingly, the second terminal receives the third information from the first terminal; and if the third information from the first terminal is received by the second terminal, the second terminal sends a third HARQ feedback message corresponding to the third information to the first terminal; or if the third information from the first terminal is not received by the second terminal, the second terminal does not send a third HARQ feedback message. After the first terminal sends the third information to the second terminal, the first terminal detects the third HARQ feedback message corresponding to the third information. For example, the third information includes third data.

Optionally, the first terminal sends fourth information to the second terminal by using a carrier in the fourth carrier group. Correspondingly, the second terminal receives the fourth information from the first terminal; and if the fourth information from the first terminal is received by the second terminal, the second terminal sends a fourth HARQ feedback message corresponding to the fourth information to the first terminal; or if the fourth information from the first terminal is not received by the second terminal, the second terminal does not send a fourth HARQ feedback message. After the first terminal sends the fourth information to the second terminal, the first terminal detects the fourth HARQ feedback message corresponding to the fourth information. For example, the fourth information includes fourth data.

The first terminal stops performing information transmission by using the first carrier group if the quantity of times that the first terminal consecutively fails to detect the first HARQ feedback message corresponding to the first information is greater than or equal to the first consecutive DTX threshold; and/or the first terminal stops performing information transmission by using the second carrier group if the quantity of times that the first terminal consecutively fails to detect the second HARQ feedback message corresponding to the second information is greater than or equal to the second consecutive DTX threshold; and/or the first terminal stops performing information transmission by using the third carrier group if a quantity of times that the first terminal consecutively fails to detect the third HARQ feedback message corresponding to the third information is greater than or equal to the third consecutive DTX threshold; and/or the first terminal stops performing information transmission by using the fourth carrier group if a quantity of times that the first terminal consecutively fails to detect the fourth HARQ feedback message corresponding to the fourth information is greater than or equal to the fourth consecutive DTX threshold. The quantity of times that the first terminal consecutively fails to detect the third HARQ feedback message corresponding to the third information may be understood as the value of the third numConsecutiveDTX recorded by the first terminal. The quantity of times that the first terminal consecutively fails to detect the fourth HARQ feedback message corresponding to the fourth information may be understood as the value of the fourth numConsecutiveDTX recorded by the first terminal.

Optionally, the first terminal releases the unicast connection between the first terminal and the second terminal if the quantity of times that the first terminal consecutively fails to detect the first HARQ feedback message corresponding to the first information is greater than or equal to the first consecutive DTX threshold, the quantity of times that the first terminal consecutively fails to detect the second HARQ feedback message corresponding to the second information is greater than or equal to the second consecutive DTX threshold, the quantity of times that the first terminal consecutively fails to detect the third HARQ feedback message corresponding to the third information is greater than or equal to the third consecutive DTX threshold, and the quantity of times that the first terminal consecutively fails to detect the fourth HARQ feedback message corresponding to the fourth information is greater than or equal to the fourth consecutive DTX threshold.

In a specific implementation, the first carrier group and the second carrier group include a licensed spectrum carrier, the third carrier group and the fourth carrier group include an unlicensed spectrum carrier, the first carrier group and the third carrier group include a low-frequency carrier, and the second carrier group and the fourth carrier group include a high-frequency carrier. It may be understood that, the carrier in the first carrier group is a low-frequency carrier in the licensed spectrum carriers, the carrier in the second carrier group is a high-frequency carrier in the licensed spectrum carriers, the carrier in the third carrier group is a low-frequency carrier in the unlicensed spectrum carriers, and the carrier in the fourth carrier group is a high-frequency carrier in the unlicensed spectrum carriers. The first carrier group may be referred to as an FR1 carrier group in a licensed spectrum, the second carrier group may be referred to as an FR2 carrier group in the licensed spectrum, the third carrier group may be referred to as an FR1 carrier group in an unlicensed spectrum, and the second carrier group may be referred to as an FR2 carrier group in the unlicensed spectrum.

The following describes the information transmission method in embodiments of this application with reference to a specific example. In the following specific example, a sending terminal is the foregoing first terminal, and a receiving terminal is the foregoing second terminal.

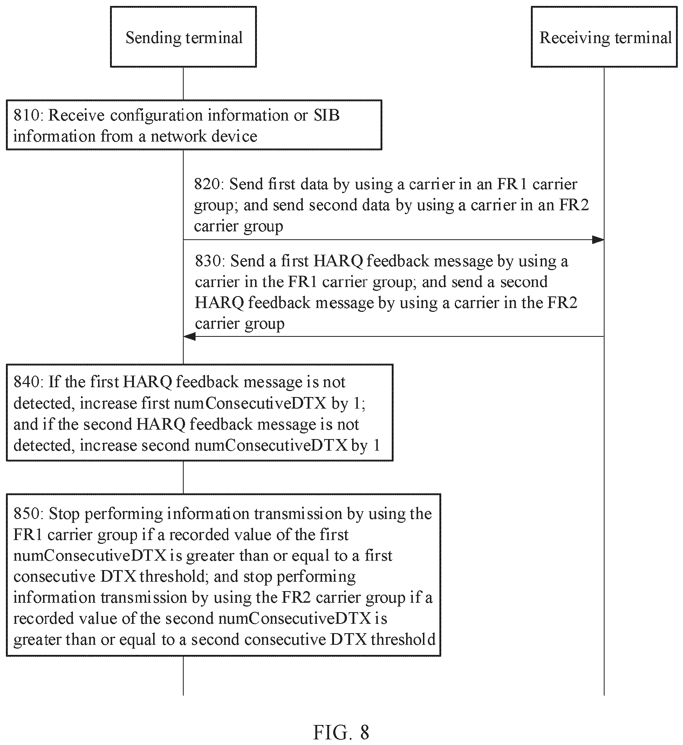

FIG. 8 is a schematic interaction flowchart of an example of the information transmission method according to an embodiment of this application. In this example, the sending terminal maintains a consecutive DTX counter corresponding to an FR1 carrier group and a consecutive DTX counter corresponding to an FR2 carrier group. It may be understood that the sending terminal records a value of first numConsecutiveDTX corresponding to the FR1 carrier group and a value of second numConsecutiveDTX corresponding to the FR2 carrier group. Specific steps are as follows.

810: A network device sends configuration information or SIB information to the sending terminal, and correspondingly, the sending terminal receives the configuration information or the SIB information from the network device. The configuration information or the SIB information includes a first consecutive DTX threshold and a second consecutive DTX threshold. The first consecutive DTX threshold is associated with the FR1 carrier group, and the second consecutive DTX threshold is associated with the FR2 carrier group.

For example, the configuration information or the SIB information sent by the network device to the first terminal includes an sl-maxNumConsecutiveDTX_FR1 field and an sl-maxNumConsecutiveDTX_FR2 field, the sl-maxNumConsecutiveDTX_FR1 field indicates the first consecutive DTX threshold, and the sl-maxNumConsecutiveDTX_FR2 field indicates the second consecutive DTX threshold. In this example, the first consecutive DTX threshold and the second consecutive DTX threshold may be the same or may be different.

For example, the configuration information or the SIB information sent by the network device to the first terminal includes an sl-maxNumConsecutiveDTX field, and the first consecutive DTX threshold and the second consecutive DTX threshold are equal to a consecutive DTX threshold indicated by the sl-maxNumConsecutiveDTX field. In this example, the first consecutive DTX threshold is the same as the second consecutive DTX threshold.

820: The sending terminal sends first data to the receiving terminal by using a carrier in the FR1 carrier group, and the sending terminal sends second data to the receiving terminal by using a carrier in the FR2 carrier group.

830: The receiving terminal receives the first data from the sending terminal; and if the first data from the sending terminal is received by the receiving terminal, the receiving terminal sends a first HARQ feedback message corresponding to the first data to the sending terminal by using a carrier in the FR1 carrier group; or if the first data from the sending terminal is not received by the receiving terminal, the receiving terminal does not send a first HARQ feedback message; and
the receiving terminal receives the second data from the sending terminal; and if the second data from the sending terminal is received by the receiving terminal, the receiving terminal sends a second HARQ feedback message corresponding to the second data to the sending terminal by using a carrier in the FR2 carrier group; or if the second data from the sending terminal is not received by the receiving terminal, the receiving terminal does not send a second HARQ feedback message.

840: After sending the first data to the receiving terminal, the sending terminal detects the first HARQ feedback message corresponding to the first data; and if the sending terminal fails to detect the first HARQ feedback message corresponding to the first data, the sending terminal increases the first numConsecutiveDTX by 1; and
after sending the second data to the receiving terminal, the sending terminal detects the second HARQ feedback message corresponding to the second data; and if the sending terminal fails to detect the second HARQ feedback message corresponding to the second data, the sending terminal increases the second numConsecutiveDTX by 1.

It should be understood that, the sending terminal sends a plurality of pieces of first data to the receiving terminal by using a plurality of carriers in the FR1 carrier group, and the sending terminal sends a plurality of pieces of second data to the receiving terminal by using a plurality of carriers in the FR2 carrier group. The sending terminal records the value of the first numConsecutiveDTX corresponding to the FR1 carrier group and the value of the second numConsecutiveDTX corresponding to the FR2 carrier group.

850: The sending terminal stops performing transmission on information/data and control signaling by using the FR1 carrier group if the value of the first numConsecutiveDTX recorded by the sending terminal is greater than or equal to the first consecutive DTX threshold; and the sending terminal stops performing transmission on information/data and control signaling by using the FR2 carrier group if the value of the second numConsecutiveDTX recorded by the sending terminal is greater than or equal to the second consecutive DTX threshold. The value of the first numConsecutiveDTX recorded by the sending terminal may be understood as a quantity of times that the sending terminal consecutively fails to detect the first HARQ feedback message corresponding to the first data. The value of the second numConsecutiveDTX recorded by the sending terminal may be understood as a quantity of times that the sending terminal consecutively fails to detect the second HARQ feedback message corresponding to the second data.

Optionally, the sending terminal releases a unicast connection between the sending terminal and the receiving terminal if the value of the first numConsecutiveDTX recorded by the sending terminal is greater than or equal to the first consecutive DTX threshold and the value of the second numConsecutiveDTX recorded by the sending terminal is greater than or equal to the second consecutive DTX threshold.

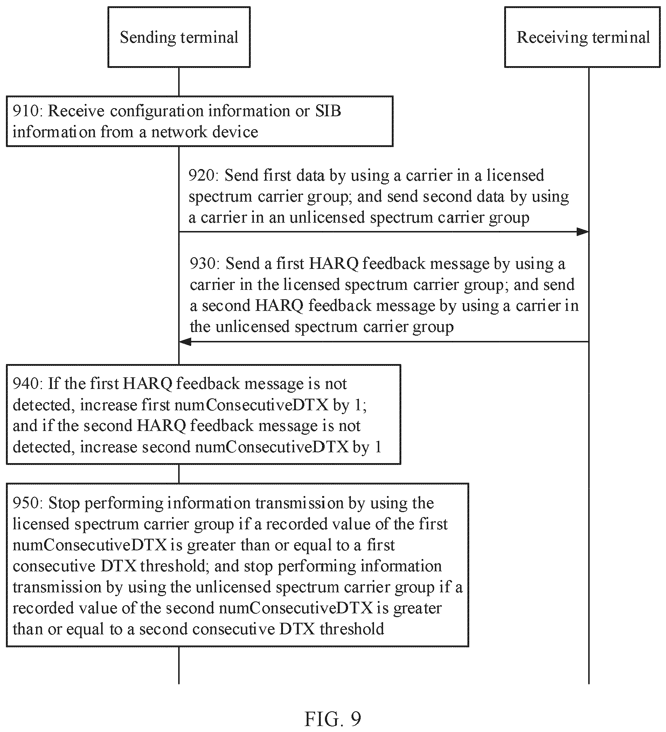

FIG. 9 is a schematic interaction flowchart of an example of the information transmission method according to an embodiment of this application. In this example, the sending terminal maintains a consecutive DTX counter corresponding to a licensed spectrum carrier group and a consecutive DTX counter corresponding to an unlicensed spectrum carrier group. It may be understood that the sending terminal records a value of first numConsecutiveDTX corresponding to the licensed spectrum carrier group and a value of second numConsecutiveDTX corresponding to the unlicensed spectrum carrier group. Specific steps are as follows.

910: A network device sends configuration information or SIB information to the sending terminal, and correspondingly, the sending terminal receives the configuration information or the SIB information from the network device. The configuration information or the SIB information includes a first consecutive DTX threshold and a second consecutive DTX threshold. The first consecutive DTX threshold is associated with the licensed spectrum carrier group, and the second consecutive DTX threshold is associated with the unlicensed spectrum carrier group.

For example, the configuration information or the SIB information sent by the network device to the first terminal includes an sl-maxNumConsecutiveDTX_lic field and an sl-maxNumConsecutiveDTX_unlic field, the sl-maxNumConsecutiveDTX_lic field indicates the first consecutive DTX threshold, and the sl-maxNumConsecutiveDTX_unlic field indicates the second consecutive DTX threshold. In this example, the first consecutive DTX threshold and the second consecutive DTX threshold may be the same or may be different.

For example, the configuration information or the SIB information sent by the network device to the first terminal includes an sl-maxNumConsecutiveDTX field, and the first consecutive DTX threshold and the second consecutive DTX threshold are equal to a consecutive DTX threshold indicated by the sl-maxNumConsecutiveDTX field. In this example, the first consecutive DTX threshold is the same as the second consecutive DTX threshold.

920: The sending terminal sends first data to the receiving terminal by using a carrier in the licensed spectrum carrier group; and the sending terminal sends second data to the receiving terminal by using a carrier in the unlicensed spectrum carrier group.

930: The receiving terminal receives the first data from the sending terminal; and if the first data from the sending terminal is received by the receiving terminal, the receiving terminal sends a first HARQ feedback message corresponding to the first data to the sending terminal by using a carrier in the licensed spectrum carrier group; or if the first data from the sending terminal is not received by the receiving terminal, the receiving terminal does not send a first HARQ feedback message; and
the receiving terminal receives the second data from the sending terminal; and if the second data from the sending terminal is received by the receiving terminal, the receiving terminal sends a second HARQ feedback message corresponding to the second data to the sending terminal by using a carrier in the unlicensed spectrum carrier group; or if the second data from the sending terminal is not received by the receiving terminal, the receiving terminal does not send a second HARQ feedback message.

940: After sending the first data to the receiving terminal, the sending terminal detects the first HARQ feedback message corresponding to the first data; and if the sending terminal fails to detect the first HARQ feedback message corresponding to the first data, the sending terminal increases the first numConsecutiveDTX by 1; and
after sending the second data to the receiving terminal, the sending terminal detects the second HARQ feedback message corresponding to the second data; and if the sending terminal fails to detect the second HARQ feedback message corresponding to the second data, the sending terminal increases the second numConsecutiveDTX by 1.

It should be understood that, the sending terminal sends a plurality of pieces of first data to the receiving terminal by using a plurality of carriers in the licensed spectrum carrier group, and the sending terminal sends a plurality of pieces of second data to the receiving terminal by using a plurality of carriers in the unlicensed spectrum carrier group. The sending terminal records the value of the first numConsecutiveDTX corresponding to the licensed spectrum carrier group and the value of the second numConsecutiveDTX corresponding to the unlicensed spectrum carrier group.

950: The sending terminal stops performing transmission on information/data and control signaling by using the licensed spectrum carrier group if the value of the first numConsecutiveDTX recorded by the sending terminal is greater than or equal to the first consecutive DTX threshold; and the sending terminal stops performing transmission on information/data and control signaling by using the unlicensed spectrum carrier group if the value of the second numConsecutiveDTX recorded by the sending terminal is greater than or equal to the second consecutive DTX threshold. The value of the first numConsecutiveDTX recorded by the sending terminal may be understood as a quantity of times that the sending terminal consecutively fails to detect the first HARQ feedback message corresponding to the first data. The value of the second numConsecutiveDTX recorded by the sending terminal may be understood as a quantity of times that the sending terminal consecutively fails to detect the second HARQ feedback message corresponding to the second data.

Optionally, the sending terminal releases a unicast connection between the sending terminal and the receiving terminal if the value of the first numConsecutiveDTX recorded by the sending terminal is greater than or equal to the first consecutive DTX threshold and the value of the second numConsecutiveDTX recorded by the sending terminal is greater than or equal to the second consecutive DTX threshold.

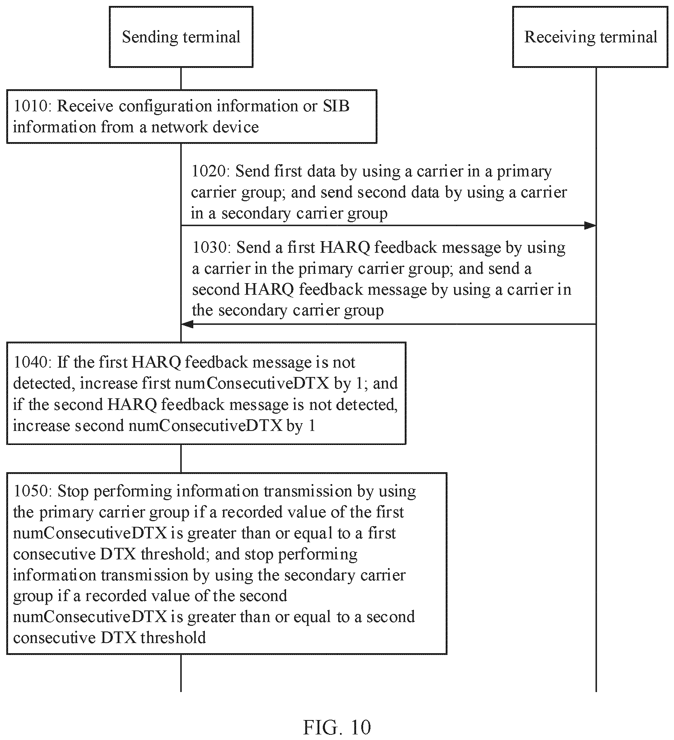

FIG. 10 is a schematic interaction flowchart of an example of the information transmission method according to an embodiment of this application. In this example, the sending terminal maintains a consecutive DTX counter corresponding to a primary carrier group and a consecutive DTX counter corresponding to a secondary carrier group. It may be understood that the sending terminal records a value of first numConsecutiveDTX corresponding to the primary carrier group and a value of second numConsecutiveDTX corresponding to the secondary carrier group. Specific steps are as follows.

1010: A network device sends configuration information or SIB information to the sending terminal, and correspondingly, the sending terminal receives the configuration information or the SIB information from the network device. The configuration information or the SIB information includes a first consecutive DTX threshold and a second consecutive DTX threshold. The first consecutive DTX threshold is associated with the primary carrier group, and the second consecutive DTX threshold is associated with the secondary carrier group.

For example, the configuration information or the SIB information sent by the network device to the first terminal includes an sl-maxNumConsecutiveDTX_pcc field and an sl-maxNumConsecutiveDTX_scc field, the sl-maxNumConsecutiveDTX_pcc field indicates the first consecutive DTX threshold, and the sl-maxNumConsecutiveDTX_scc field indicates the second consecutive DTX threshold. In this example, the first consecutive DTX threshold and the second consecutive DTX threshold may be the same or may be different.

For example, the configuration information or the SIB information sent by the network device to the first terminal includes an sl-maxNumConsecutiveDTX field, and the first consecutive DTX threshold and the second consecutive DTX threshold are equal to a consecutive DTX threshold indicated by the sl-maxNumConsecutiveDTX field. In this example, the first consecutive DTX threshold is the same as the second consecutive DTX threshold.

1020: The sending terminal sends first data to the receiving terminal by using a carrier in the primary carrier group; and the sending terminal sends second data to the receiving terminal by using a carrier in the secondary carrier group.

1030: The receiving terminal receives the first data from the sending terminal; and if the first data from the sending terminal is received by the receiving terminal, the receiving terminal sends a first HARQ feedback message corresponding to the first data to the sending terminal by using a carrier in the primary carrier group; or if the first data from the sending terminal is not received by the receiving terminal, the receiving terminal does not send a first HARQ feedback message; and
the receiving terminal receives the second data from the sending terminal; and if the second data from the sending terminal is received by the receiving terminal, the receiving terminal sends a second HARQ feedback message corresponding to the second data to the sending terminal by using a carrier in the secondary carrier group;
or if the second data from the sending terminal is not received by the receiving terminal, the receiving terminal does not send a second HARQ feedback message.

1040: After sending the first data to the receiving terminal, the sending terminal detects the first HARQ feedback message corresponding to the first data; and if the sending terminal fails to detect the first HARQ feedback message corresponding to the first data, the sending terminal increases the first numConsecutiveDTX by 1; and
after sending the second data to the receiving terminal, the sending terminal detects the second HARQ feedback message corresponding to the second data; and if the sending terminal fails to detect the second HARQ feedback message corresponding to the second data, the sending terminal increases the second numConsecutiveDTX by 1.

It should be understood that, the sending terminal sends a plurality of pieces of first data to the receiving terminal by using the plurality of carriers in the primary carrier group, and the sending terminal sends a plurality of pieces of second data to the receiving terminal by using the plurality of carriers in the secondary carrier group. The sending terminal records the value of the first numConsecutiveDTX corresponding to the primary carrier group and the value of the second numConsecutiveDTX corresponding to the secondary carrier group.

1050: The sending terminal stops performing transmission on information/data and control signaling by using the primary carrier group and the secondary carrier group if the value of the first numConsecutiveDTX recorded by the sending terminal is greater than or equal to the first consecutive DTX threshold; and the sending terminal stops performing transmission on information/data and control signaling by using the secondary carrier group if the value of the second numConsecutiveDTX recorded by the sending terminal is greater than or equal to the second consecutive DTX threshold. The value of the first numConsecutiveDTX recorded by the sending terminal may be understood as a quantity of times that the sending terminal consecutively fails to detect the first HARQ feedback message corresponding to the first data. The value of the second numConsecutiveDTX recorded by the sending terminal may be understood as a quantity of times that the sending terminal consecutively fails to detect the second HARQ feedback message corresponding to the second data.

It should be understood that, the sending terminal stops performing transmission on information/data and control signaling by using the secondary carrier group but may continue to perform transmission on information/data and control signaling by using the primary carrier group if the value of the second numConsecutiveDTX recorded by the sending terminal is greater than or equal to the second consecutive DTX threshold, but the value of the first numConsecutiveDTX recorded by the sending terminal is less than the first consecutive DTX threshold.

Optionally, the sending terminal releases a unicast connection between the sending terminal and the receiving terminal if the value of the first numConsecutiveDTX recorded by the sending terminal is greater than or equal to the first consecutive DTX threshold.

Optionally, the sending terminal releases a unicast connection between the sending terminal and the receiving terminal if the value of the first numConsecutiveDTX recorded by the sending terminal is greater than or equal to the first consecutive DTX threshold and the value of the second numConsecutiveDTX recorded by the sending terminal is greater than or equal to the second consecutive DTX threshold.

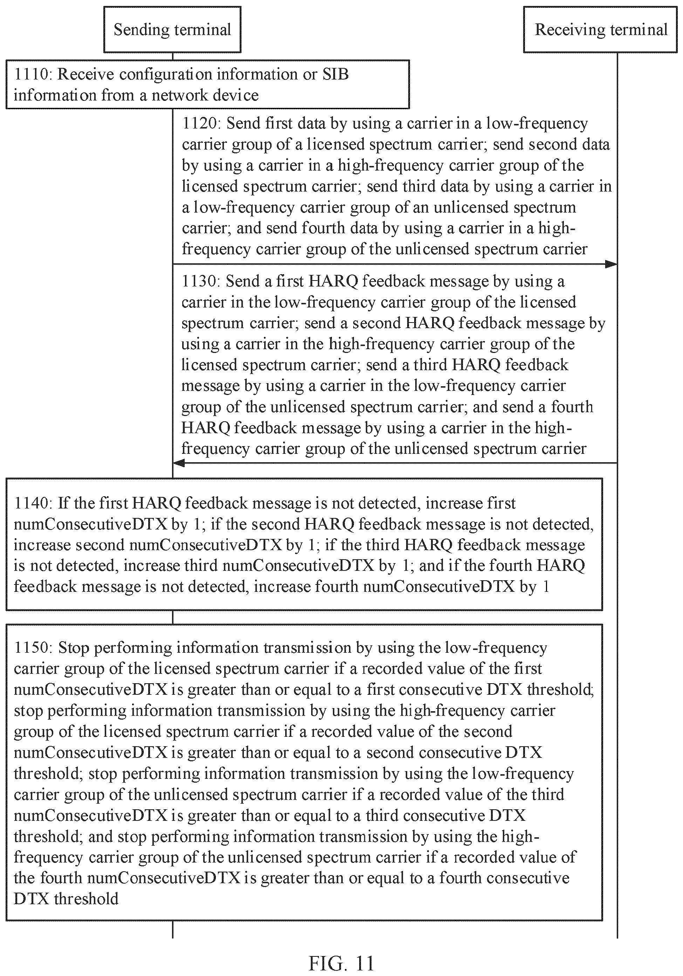

FIG. 11 is a schematic interaction flowchart of an example of the information transmission method according to an embodiment of this application. In this example, the sending terminal maintains a consecutive DTX counter corresponding to a low-frequency carrier group of a licensed spectrum carrier, a consecutive DTX counter corresponding to a high-frequency carrier group of the licensed spectrum carrier, a consecutive DTX counter corresponding to a low-frequency carrier group of an unlicensed spectrum carrier, and a consecutive DTX counter corresponding to a high-frequency carrier group of the unlicensed spectrum carrier. It may be understood that the sending terminal records a value of first numConsecutiveDTX corresponding to the low-frequency carrier group of the licensed spectrum carrier, a value of second numConsecutiveDTX corresponding to the high-frequency carrier group of the licensed spectrum carrier, a value of third numConsecutiveDTX corresponding to the low-frequency carrier group of the unlicensed spectrum carrier, and a value of fourth numConsecutiveDTX corresponding to the high-frequency carrier group of the unlicensed spectrum carrier. Specific steps are as follows.

1110: A network device sends configuration information or SIB information to the sending terminal, and correspondingly, the sending terminal receives the configuration information or the SIB information from the network device. The configuration information or the SIB information includes a first consecutive DTX threshold, a second consecutive DTX threshold, a third consecutive DTX threshold, and a fourth consecutive DTX threshold. The first consecutive DTX threshold is associated with the low-frequency carrier group of the licensed spectrum carrier, the second consecutive DTX threshold is associated with the high-frequency carrier group of the licensed spectrum carrier, the third consecutive DTX threshold is associated with the low-frequency carrier group of the unlicensed spectrum carrier, and the fourth consecutive DTX threshold is associated with the high-frequency carrier group of the unlicensed spectrum carrier.

For example, the configuration information or the SIB information sent by the network device to the first terminal includes an sl-maxNumConsecutiveDTX_lic_FR1 field, an sl-maxNumConsecutiveDTX_lic_FR2 field, an sl-maxNumConsecutiveDTX_unlic_FR1 field, and an sl-maxNumConsecutiveDTX_unlic_FR2 field. The sl-maxNumConsecutiveDTX_lic_FR1 field indicates the first consecutive DTX threshold, the sl-maxNumConsecutiveDTX_lic_FR2 field indicates the second consecutive DTX threshold, the sl-maxNumConsecutiveDTX_unlic_FR1 field indicates the third consecutive DTX threshold, and the sl-maxNumConsecutiveDTX_unlic_FR2 field indicates the fourth consecutive DTX threshold. In this example, the first consecutive DTX threshold, the second consecutive DTX threshold, the third consecutive DTX threshold, and the fourth consecutive DTX threshold may be the same or may be different.

For example, the configuration information or the SIB information sent by the network device to the first terminal includes an sl-maxNumConsecutiveDTX field, and the first consecutive DTX threshold, the second consecutive DTX threshold, the third consecutive DTX threshold, and the fourth consecutive DTX threshold are equal to a consecutive DTX threshold indicated by the sl-maxNumConsecutiveDTX field. In this example, the first consecutive DTX threshold, the second consecutive DTX threshold, the third consecutive DTX threshold, and the fourth consecutive DTX threshold are the same.

1120: The sending terminal sends first data to the receiving terminal by using a carrier in the low-frequency carrier group of the licensed spectrum carrier; the sending terminal sends second data to the receiving terminal by using a carrier in the high-frequency carrier group of the licensed spectrum carrier; the sending terminal sends third data to the receiving terminal by using a carrier in the low-frequency carrier group of the unlicensed spectrum carrier; and the sending terminal sends fourth data to the receiving terminal by using a carrier in the high-frequency carrier group of the unlicensed spectrum carrier.

1130: The receiving terminal receives the first data from the sending terminal; and if the first data from the sending terminal is received by the receiving terminal, the receiving terminal sends a first HARQ feedback message corresponding to the first data to the sending terminal by using a carrier in the low-frequency carrier group of the licensed spectrum carrier; or if the first data from the sending terminal is not received by the receiving terminal, the receiving terminal does not send a first HARQ feedback message;
the receiving terminal receives the second data from the sending terminal; and if the second data from the sending terminal is received by the receiving terminal, the receiving terminal sends a second HARQ feedback message corresponding to the second data to the sending terminal by using a carrier in the high-frequency carrier group of the licensed spectrum carrier; or if the second data from the sending terminal is not received by the receiving terminal, the receiving terminal does not send a second HARQ feedback message;
the receiving terminal receives the third data from the sending terminal; and if the third data from the sending terminal is received by the receiving terminal, the receiving terminal sends a third HARQ feedback message corresponding to the third data to the sending terminal by using a carrier in the low-frequency carrier group of the unlicensed spectrum carrier; or if the third data from the sending terminal is not received by the receiving terminal, the receiving terminal does not send a third HARQ feedback message; and
the receiving terminal receives the fourth data from the sending terminal; and if the fourth data from the sending terminal is received by the receiving terminal, the receiving terminal sends a fourth HARQ feedback message corresponding to the fourth data to the sending terminal by using a carrier in the high-frequency carrier group of the unlicensed spectrum carrier; or if the fourth data from the sending terminal is not received by the receiving terminal, the receiving terminal does not send a fourth HARQ feedback message.

1140: After sending the first data to the receiving terminal, the sending terminal detects the first HARQ feedback message corresponding to the first data; and if the sending terminal fails to detect the first HARQ feedback message corresponding to the first data, the sending terminal increases the first numConsecutiveDTX by 1;
after sending the second data to the receiving terminal, the sending terminal detects the second HARQ feedback message corresponding to the second data; and if the sending terminal fails to detect the second HARQ feedback message corresponding to the second data, the sending terminal increases the second numConsecutiveDTX by 1;
after sending the third data to the receiving terminal, the sending terminal detects the third HARQ feedback message corresponding to the third data; and if the sending terminal fails to detect the third HARQ feedback message corresponding to the third data, the sending terminal increases the third numConsecutiveDTX by 1; and
after sending the fourth data to the receiving terminal, the sending terminal detects the fourth HARQ feedback message corresponding to the fourth data; and if the sending terminal fails to detect the fourth HARQ feedback message corresponding to the fourth data, the sending terminal increases the fourth numConsecutiveDTX by 1.

It should be understood that, the sending terminal sends a plurality of pieces of first data to the receiving terminal by using a plurality of carriers in the low-frequency carrier group of the licensed spectrum carrier; the sending terminal sends a plurality of pieces of second data to the receiving terminal by using a plurality of carriers in the high-frequency carrier group of the licensed spectrum carrier; the sending terminal sends a plurality of pieces of third data to the receiving terminal by using a plurality of carriers in the low-frequency carrier group of the unlicensed spectrum carrier; and the sending terminal sends a plurality of pieces of fourth data to the receiving terminal by using a plurality of carriers in the high-frequency carrier group of the unlicensed spectrum carrier. The sending terminal records the value of the first numConsecutiveDTX corresponding to the low-frequency carrier group of the licensed spectrum carrier, the value of the second numConsecutiveDTX corresponding to the high-frequency carrier group of the licensed spectrum carrier, the value of the third numConsecutiveDTX corresponding to the low-frequency carrier group of the unlicensed spectrum carrier, and the value of the fourth numConsecutiveDTX corresponding to the high-frequency carrier group of the unlicensed spectrum carrier.

1150: The sending terminal stops performing transmission on information/data and control signaling by using the low-frequency carrier group of the licensed spectrum carrier if the value of the first numConsecutiveDTX recorded by the sending terminal is greater than or equal to the first consecutive DTX threshold; the sending terminal stops performing transmission on information/data and control signaling by using the high-frequency carrier group of the licensed spectrum carrier if the value of the second numConsecutiveDTX recorded by the sending terminal is greater than or equal to the second consecutive DTX threshold; the sending terminal stops performing transmission on information/data and control signaling by using the low-frequency carrier group of the unlicensed spectrum carrier if the value of the third numConsecutiveDTX recorded by the sending terminal is greater than or equal to the third consecutive DTX threshold; and the sending terminal stops performing transmission on information/data and control signaling by using the high-frequency carrier group of the unlicensed spectrum carrier if the value of the fourth numConsecutiveDTX recorded by the sending terminal is greater than or equal to the fourth consecutive DTX threshold.

The value of the first numConsecutiveDTX recorded by the sending terminal may be understood as a quantity of times that the sending terminal consecutively fails to detect the first HARQ feedback message corresponding to the first data. The value of the second numConsecutiveDTX recorded by the sending terminal may be understood as a quantity of times that the sending terminal consecutively fails to detect the second HARQ feedback message corresponding to the second data. The value of the third numConsecutiveDTX recorded by the sending terminal may be understood as a quantity of times that the sending terminal consecutively fails to detect the third HARQ feedback message corresponding to the third data. The value of the fourth numConsecutiveDTX recorded by the sending terminal may be understood as a quantity of times that the sending terminal consecutively fails to detect the fourth HARQ feedback message corresponding to the fourth data.

Optionally, the sending terminal releases a unicast connection between the sending terminal and the receiving terminal if the value of the first numConsecutiveDTX recorded by the sending terminal is greater than or equal to the first consecutive DTX threshold, the value of the second numConsecutiveDTX recorded by the sending terminal is greater than or equal to the second consecutive DTX threshold, the value of the third numConsecutiveDTX recorded by the sending terminal is greater than or equal to the third consecutive DTX threshold, and the value of the fourth numConsecutiveDTX recorded by the sending terminal is greater than or equal to the fourth consecutive DTX threshold.

The foregoing describes the information transmission method provided in embodiments of this application. The following describes entities for performing the foregoing information transmission method.

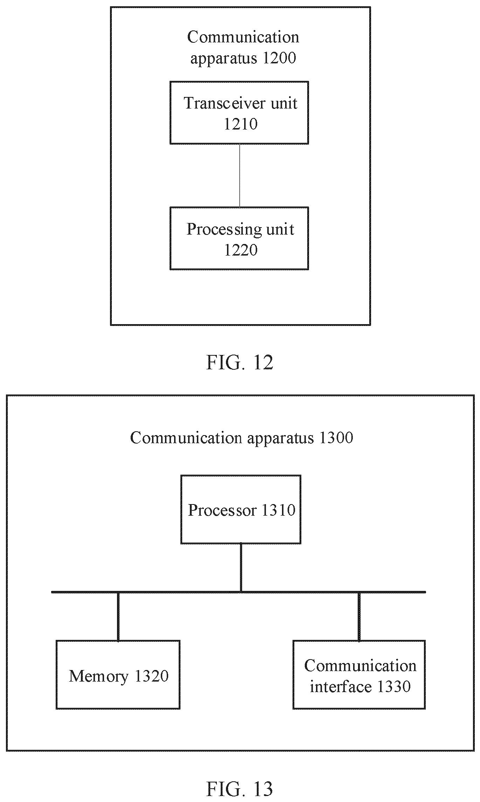

FIG. 12 is a block diagram of a communication apparatus 1200 according to an embodiment of this application. The apparatus may be used in or deployed in the first terminal in the method embodiments of this application. The apparatus performs unicast communication with a second terminal over a sidelink. The communication apparatus 1200 includes:
a transceiver unit 1210, configured to receive configuration information from a network device, where the configuration information includes a first consecutive discontinuous transmission DTX threshold and a second consecutive DTX threshold, the first consecutive DTX threshold is associated with a first carrier group, and the second consecutive DTX threshold is associated with a second carrier group;
the transceiver unit 1210 is further configured to send first information to the second terminal by using a carrier in the first carrier group; and
the transceiver unit 1210 is further configured to send second information to the second terminal by using a carrier in the second carrier group; and
a processing unit 1220, configured to: stop performing information transmission by using the first carrier group if a quantity of times that the apparatus consecutively fails to detect a first hybrid automatic repeat request HARQ feedback message corresponding to the first information is greater than or equal to the first consecutive DTX threshold; and/or stop performing information transmission by using the second carrier group if a quantity of times that the apparatus consecutively fails to detect a second HARQ feedback message corresponding to the second information is greater than or equal to the second consecutive DTX threshold.

Optionally, the processing unit 1220 is further configured to release a unicast connection between the apparatus and the second terminal if the quantity of times that the apparatus consecutively fails to detect the first HARQ feedback message corresponding to the first information is greater than or equal to the first consecutive DTX threshold and the quantity of times that the apparatus consecutively fails to detect the second HARQ feedback message corresponding to the second information is greater than or equal to the second consecutive DTX threshold.

Optionally, the first carrier group includes a low-frequency carrier, and the second carrier group includes a high-frequency carrier; or the first carrier group includes a licensed spectrum carrier, and the second carrier group includes an unlicensed spectrum carrier.

Optionally, the second consecutive DTX threshold is greater than the first consecutive DTX threshold.

Optionally, the first carrier group includes a primary carrier, and the second carrier group includes a secondary carrier.

Optionally, the processing unit 1220 is specifically configured to stop performing information transmission by using the first carrier group and the second carrier group if the quantity of times that the apparatus consecutively fails to detect the first HARQ feedback message corresponding to the first information is greater than or equal to the first consecutive DTX threshold.

Optionally, the processing unit 1220 is further configured to release the unicast connection between the apparatus and the second terminal if the quantity of times that the apparatus consecutively fails to detect the first HARQ feedback message corresponding to the first information is greater than or equal to the first consecutive DTX threshold.

Optionally, the configuration information further includes a third consecutive DTX threshold and a fourth consecutive DTX threshold, the third consecutive DTX threshold is associated with a third carrier group, and the fourth consecutive DTX threshold is associated with a fourth carrier group;
the transceiver unit 1210 is further configured to send third information to the second terminal by using a carrier in the third carrier group;
the transceiver unit 1210 is further configured to send fourth information to the second terminal by using a carrier in the fourth carrier group; and
the processing unit 1220 is further configured to: stop performing information transmission by using the third carrier group if a quantity of times that a third HARQ feedback message corresponding to the third information is consecutively not detected is greater than or equal to the third consecutive DTX threshold; and/or stop performing information transmission by using the fourth carrier group if a quantity of times that a fourth HARQ feedback message corresponding to the fourth information is consecutively not detected is greater than or equal to the fourth consecutive DTX threshold.

Optionally, the processing unit 1220 is further configured to release a unicast connection between the apparatus and the second terminal if the quantity of times that the apparatus consecutively fails to detect the first HARQ feedback message corresponding to the first information is greater than or equal to the first consecutive DTX threshold, the quantity of times that the apparatus consecutively fails to detect the second HARQ feedback message corresponding to the second information is greater than or equal to the second consecutive DTX threshold, the quantity of times that the apparatus consecutively fails to detect the third HARQ feedback message corresponding to the third information is greater than or equal to the third consecutive DTX threshold, and the quantity of times that the apparatus consecutively fails to detect the fourth HARQ feedback message corresponding to the fourth information is greater than or equal to the fourth consecutive DTX threshold.

Optionally, the first carrier group and the second carrier group include a licensed spectrum carrier, the third carrier group and the fourth carrier group include an unlicensed spectrum carrier, the first carrier group and the third carrier group include a low-frequency carrier, and the second carrier group and the fourth carrier group include a high-frequency carrier.

FIG. 13 is a block diagram of another communication apparatus 1300 according to an embodiment of this application. The communication apparatus 1300 includes a processor 1310, a memory 1320, and a communication interface 1330.

The memory 1320 is configured to store a computer program.

The processor 1310 is coupled to the memory 1320 by using the communication interface 1330. The processor 1310 is configured to invoke and run the computer program in the memory 1320, to implement the method in embodiments of this application. The communication apparatus may be used in the first terminal in embodiments of this application. Optionally, the processor 1310 and the memory 1320 are integrated together.

The processor 1310 may be an integrated circuit chip and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, embodiments of this application further provide a communication device. The communication device includes an input/output interface and a logic circuit. The input/output interface is configured to obtain input information and/or output information. The logic circuit is configured to: perform the method in any one of the method embodiments, and perform processing and/or generate output information based on the input information.

Embodiments of this application provide a communication system, including the first terminal, the second terminal, and the network device in the information transmission method in embodiments of this application.

Embodiments of this application further provide a computer-readable storage medium. The computer-readable storage medium stores a computer program for implementing the method in the foregoing method embodiments. When the computer program is run on a computer, the computer is enabled to implement the method in the foregoing method embodiments.

Embodiments of this application further provide a computer program product. The computer program product includes computer program code. When the computer program code is run on a computer, the method in the foregoing method embodiments can be performed.

Embodiments of this application further provide a chip, including a processor. The processor is connected to a memory. The memory is configured to store a computer program. The processor is configured to execute the computer program stored in the memory, to enable the chip to perform the method in the foregoing method embodiments.

It should be understood that in embodiments of this application, numbers such as "first" and "second" are merely used to distinguish between different objects, for example, to distinguish between different terminals, different carrier groups, and the like, and constitute no limitation on the scope of embodiments of this application. Embodiments of this application are not limited thereto.

In addition, the term "and/or" in this application describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between the associated objects. In this application, the term "at least one" may indicate "one" and "two or more". For example, at least one of A, B, and C may indicate the following seventh cases: Only A exists, only B exists, only C exists, both A and B exist, both A and C exist, both C and B exist, and A, B, and C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

It may be clearly understood by a person skilled in the art that, for the purpose of convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one location, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or a part contributing to a conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein a first terminal performs unicast communication with a second terminal over a sidelink, and the method comprises:
receiving (701), by the first terminal, configuration information from a network device, wherein the configuration information comprises a first consecutive discontinuous transmission, DTX, threshold and a second consecutive DTX threshold, the first consecutive DTX threshold is associated with a first carrier group, and the second consecutive DTX threshold is associated with a second carrier group, wherein the first consecutive DTX threshold is different from the second consecutive DTX threshold;
sending (720), by the first terminal, first information to the second terminal by using a carrier in the first carrier group;
sending (730), by the first terminal, second information to the second terminal by using a carrier in the second carrier group; and
stopping (740), by the first terminal, performing information transmission by using the first carrier group when a quantity of times that the first terminal consecutively fails to detect a first hybrid automatic repeat request, HARQ, feedback message corresponding to the first information is greater than or equal to the first consecutive DTX threshold; and
stopping (740), by the first terminal, performing information transmission by using the second carrier group when a quantity of times that the first terminal consecutively fails to detect a second HARQ feedback message corresponding to the second information is greater than or equal to the second consecutive DTX threshold.

2. The method according to claim 1, wherein the method further comprises:
releasing, by the first terminal, a unicast connection between the first terminal and the second terminal when it is both determined that the quantity of times that the first terminal consecutively fails to detect the first HARQ feedback message corresponding to the first information is greater than or equal to the first consecutive DTX threshold and the quantity of times that the first terminal consecutively fails to detect the second HARQ feedback message corresponding to the second information is greater than or equal to the second consecutive DTX threshold.

3. The method according to claim 1 or 2, wherein
the first carrier group comprises a low-frequency carrier, and the second carrier group comprises a high-frequency carrier; or
the first carrier group comprises a licensed spectrum carrier, and the second carrier group comprises an unlicensed spectrum carrier.

4. The method according to claim 3, wherein
the second consecutive DTX threshold is greater than the first consecutive DTX threshold.

5. The method according to claim 1 or 2, wherein
the first carrier group comprises a primary carrier, and the second carrier group comprises a secondary carrier.

6. The method according to claim 5, wherein the stopping (740), by the first terminal, performing information transmission by using the first carrier group if a quantity of times that the first terminal consecutively fails to detect a first HARQ feedback message corresponding to the first information is greater than or equal to the first consecutive DTX threshold comprises:
stopping, by the first terminal, performing information transmission by using the first carrier group and the second carrier group if the quantity of times that the first terminal consecutively fails to detect the first HARQ feedback message corresponding to the first information is greater than or equal to the first consecutive DTX threshold.

7. The method according to claim 5 or 6, wherein the method further comprises:
releasing, by the first terminal, the unicast connection between the first terminal and the second terminal if the quantity of times that the first terminal consecutively fails to detect the first HARQ feedback message corresponding to the first information is greater than or equal to the first consecutive DTX threshold.

8. The method according to claim 1, wherein the configuration information further comprises a third consecutive DTX threshold and a fourth consecutive DTX threshold, the third consecutive DTX threshold is associated with a third carrier group, and the fourth consecutive DTX threshold is associated with a fourth carrier group; and
the method further comprises:
sending (1120), by the first terminal, third information to the second terminal by using a carrier in the third carrier group;
sending (1120), by the first terminal, fourth information to the second terminal by using a carrier in the fourth carrier group; and
stopping (1150), by the first terminal, performing information transmission by using the third carrier group if a quantity of times that the first terminal consecutively fails to detect a third HARQ feedback message corresponding to the third information is greater than or equal to the third consecutive DTX threshold; and/or
stopping (1150), by the first terminal, performing information transmission by using the fourth carrier group if a quantity of times that the first terminal consecutively fails to detect a fourth HARQ feedback message corresponding to the fourth information is greater than or equal to the fourth consecutive DTX threshold.

9. The method according to claim 8, wherein the method further comprises:
releasing, by the first terminal, a unicast connection between the first terminal and the second terminal if the quantity of times that the first terminal consecutively fails to detect the first HARQ feedback message corresponding to the first information is greater than or equal to the first consecutive DTX threshold, the quantity of times that the first terminal consecutively fails to detect the second HARQ feedback message corresponding to the second information is greater than or equal to the second consecutive DTX threshold, the quantity of times that the first terminal consecutively fails to detect the third HARQ feedback message corresponding to the third information is greater than or equal to the third consecutive DTX threshold, and the quantity of times that the first terminal consecutively fails to detect the fourth HARQ feedback message corresponding to the fourth information is greater than or equal to the fourth consecutive DTX threshold.

10. The method according to claim 8 or 9, wherein
the first carrier group and the second carrier group comprise a licensed spectrum carrier, the third carrier group and the fourth carrier group comprise an unlicensed spectrum carrier, the first carrier group and the third carrier group comprise a low-frequency carrier, and the second carrier group and the fourth carrier group comprise a high-frequency carrier.

11. An apparatus (1200; 1300), wherein the apparatus is configured to perform the method according to any one of claims 1 to 10.

12. A computer readable storage medium comprising instructions, wherein which, when executed by a computer device, cause the computer device to perform the method according to any one of claims 1 to 10.

13. A computer program product, comprising instructions, wherein which, when executed by a computer device, cause the computer device to perform the method according to any one of claims 1 to 10.

## Patentansprüche

1. Informationsübertragungsverfahren, wobei ein erstes Endgerät eine Unicast-Kommunikation mit einem zweiten Endgerät über einen Sidelink durchführt und das Verfahren Folgendes umfasst:
Empfangen (701), durch das erste Endgerät, von Konfigurationsinformationen von einer Netzwerkvorrichtung, wobei die Konfigurationsinformationen einen ersten Schwellenwert für aufeinanderfolgende diskontinuierliche Übertragung, DTX, und einen zweiten Schwellenwert für aufeinanderfolgende DTX umfassen, der erste Schwellenwert für aufeinanderfolgende DTX einer ersten Trägergruppe zugeordnet ist und der zweite Schwellenwert für aufeinanderfolgende DTX einer zweiten Trägergruppe zugeordnet ist, wobei sich der erste Schwellenwert für aufeinanderfolgende DTX von dem zweiten Schwellenwert für aufeinanderfolgende DTX unterscheidet;
Senden (720), durch das erste Endgerät, erster Informationen an das zweite Endgerät unter Verwendung eines Trägers in der ersten Trägergruppe;
Senden (730), durch das erste Endgerät, zweiter Informationen an das zweite Endgerät unter Verwendung eines Trägers in der zweiten Trägergruppe; und
Beenden (740), durch das erste Endgerät, der Informationsübertragung unter Verwendung der ersten Trägergruppe, wenn die Anzahl der Male, in denen das erste Endgerät eine den ersten Informationen entsprechende erste Rückmeldungsnachricht für hybride automatische Wiederholungsanforderung, HARQ, aufeinanderfolgend nicht detektiert, größer als oder gleich dem ersten Schwellenwert für aufeinanderfolgende DTX ist; und
Beenden (740), durch das erste Endgerät, der Informationsübertragung unter Verwendung der zweiten Trägergruppe, wenn die Anzahl der Male, in denen das erste Endgerät eine den zweiten Informationen entsprechende zweite HARQ-Rückmeldungsnachricht aufeinanderfolgend nicht detektiert, größer als oder gleich dem zweiten Schwellenwert für aufeinanderfolgende DTX ist.

2. Verfahren nach Anspruch 1, wobei das Verfahren ferner Folgendes umfasst:
Freigeben, durch das erste Endgerät, einer Unicast-Verbindung zwischen dem ersten Endgerät und dem zweiten Endgerät, wenn bestimmt wird, dass sowohl die Anzahl der Male, in denen das erste Endgerät die den ersten Informationen entsprechende erste HARQ-Rückmeldungsnachricht aufeinanderfolgend nicht detektiert, größer als oder gleich dem ersten Schwellenwert für aufeinanderfolgende DTX ist, als auch die Anzahl der Male, in denen das erste Endgerät die den zweiten Informationen entsprechende zweite HARQ-Rückmeldungsnachricht aufeinanderfolgend nicht detektiert, größer als oder gleich dem zweiten Schwellenwert für aufeinanderfolgende DTX ist.

3. Verfahren nach Anspruch 1 oder 2, wobei
die erste Trägergruppe einen Niederfrequenzträger umfasst und die zweite Trägergruppe einen Hochfrequenzträger umfasst; oder
die erste Trägergruppe einen Träger in einem lizenzierten Spektrum umfasst und die zweite Trägergruppe einen Träger in einem unlizenzierten Spektrum umfasst.

4. Verfahren nach Anspruch 3, wobei
der zweite Schwellenwert für aufeinanderfolgende DTX größer als der erste Schwellenwert für aufeinanderfolgende DTX ist.

5. Verfahren nach Anspruch 1 oder 2, wobei
die erste Trägergruppe einen Primärträger umfasst und die zweite Trägergruppe einen Sekundärträger umfasst.

6. Verfahren nach Anspruch 5, wobei das Beenden (740), durch das erste Endgerät, der Informationsübertragung unter Verwendung der ersten Trägergruppe, wenn die Anzahl der Male, in denen das erste Endgerät eine den ersten Informationen entsprechende erste HARQ-Rückmeldungsnachricht aufeinanderfolgend nicht detektiert, größer als oder gleich dem ersten Schwellenwert für aufeinanderfolgende DTX ist, Folgendes umfasst:
Beenden, durch das erste Endgerät, der Informationsübertragung unter Verwendung der ersten Trägergruppe und der zweiten Trägergruppe, wenn die Anzahl der Male, in denen das erste Endgerät die den ersten Informationen entsprechende erste HARQ-Rückmeldungsnachricht aufeinanderfolgend nicht detektiert, größer als oder gleich dem ersten Schwellenwert für aufeinanderfolgende DTX ist.

7. Verfahren nach Anspruch 5 oder 6, wobei das Verfahren ferner Folgendes umfasst:
Freigeben, durch das erste Endgerät, der Unicast-Verbindung zwischen dem ersten Endgerät und dem zweiten Endgerät, wenn die Anzahl der Male, in denen das erste Endgerät die den ersten Informationen entsprechende erste HARQ-Rückmeldungsnachricht aufeinanderfolgend nicht detektiert, größer als oder gleich dem ersten Schwellenwert für aufeinanderfolgende DTX ist.

8. Verfahren nach Anspruch 1, wobei die Konfigurationsinformationen ferner einen dritten Schwellenwert für aufeinanderfolgende DTX und einen vierten Schwellenwert für aufeinanderfolgende DTX umfassen, der dritte Schwellenwert für aufeinanderfolgende DTX einer dritten Trägergruppe zugeordnet ist und der vierte Schwellenwert für aufeinanderfolgende DTX einer vierten Trägergruppe zugeordnet ist; und
das Verfahren ferner Folgendes umfasst:
Senden (1120), durch das erste Endgerät, dritter Informationen an das zweite Endgerät unter Verwendung eines Trägers in der dritten Trägergruppe;
Senden (1120), durch das erste Endgerät, vierter Informationen an das zweite Endgerät unter Verwendung eines Trägers in der vierten Trägergruppe; und
Beenden (1150), durch das erste Endgerät, der Informationsübertragung unter Verwendung der dritten Trägergruppe, wenn die Anzahl der Male, in denen das erste Endgerät eine den dritten Informationen entsprechende dritte HARQ-Rückmeldungsnachricht aufeinanderfolgend nicht detektiert, größer als oder gleich dem dritten Schwellenwert für aufeinanderfolgende DTX ist; und/oder
Beenden (1150), durch das erste Endgerät, der Informationsübertragung unter Verwendung der vierten Trägergruppe, wenn die Anzahl der Male, in denen das erste Endgerät eine den vierten Informationen entsprechende vierte HARQ-Rückmeldungsnachricht aufeinanderfolgend nicht detektiert, größer als oder gleich dem vierten Schwellenwert für aufeinanderfolgende DTX ist.

9. Verfahren nach Anspruch 8, wobei das Verfahren ferner Folgendes umfasst:
Freigeben, durch das erste Endgerät, einer Unicast-Verbindung zwischen dem ersten Endgerät und dem zweiten Endgerät, wenn die Anzahl der Male, in denen das erste Endgerät die den ersten Informationen entsprechende erste HARQ-Rückmeldungsnachricht aufeinanderfolgend nicht detektiert, größer als oder gleich dem ersten Schwellenwert für aufeinanderfolgende DTX ist, die Anzahl der Male, in denen das erste Endgerät die den zweiten Informationen entsprechende zweite HARQ-Rückmeldungsnachricht aufeinanderfolgend nicht detektiert, größer als oder gleich dem zweiten Schwellenwert für aufeinanderfolgende DTX ist, die Anzahl der Male, in denen das erste Endgerät die den dritten Informationen entsprechende dritte HARQ-Rückmeldungsnachricht aufeinanderfolgend nicht detektiert, größer als oder gleich dem dritten Schwellenwert für aufeinanderfolgende DTX ist und die Anzahl der Male, in denen das erste Endgerät die den vierten Informationen entsprechende vierte HARQ-Rückmeldungsnachricht aufeinanderfolgend nicht detektiert, größer als oder gleich dem vierten Schwellenwert für aufeinanderfolgende DTX ist.

10. Verfahren nach Anspruch 8 oder 9, wobei
die erste Trägergruppe und die zweite Trägergruppe einen Träger in einem lizenzierten Spektrum umfassen, die dritte Trägergruppe und die vierte Trägergruppe einen Träger in einem unlizenzierten Spektrum umfassen, die erste Trägergruppe und die dritte Trägergruppe einen Niederfrequenzträger umfassen und die zweite Trägergruppe und die vierte Trägergruppe einen Hochfrequenzträger umfassen.

11. Vorrichtung (1200; 1300), wobei die Vorrichtung dazu ausgelegt ist, das Verfahren nach einem der Ansprüche 1 bis 10 durchzuführen.

12. Computerlesbares Speichermedium, umfassend Anweisungen, die bei Ausführung durch eine Computervorrichtung bewirken, dass die Computervorrichtung das Verfahren nach einem der Ansprüche 1 bis 10 durchführt.

13. Computerprogrammprodukt, umfassend Anweisungen, die bei Ausführung durch eine Computervorrichtung bewirken, dass die Computervorrichtung das Verfahren nach einem der Ansprüche 1 bis 10 durchführt.

## Revendications

1. Procédé de transmission d'informations, dans lequel un premier terminal effectue une communication de monodiffusion avec un deuxième terminal sur une liaison latérale, le procédé comprenant les étapes suivantes :
recevoir (701), par le premier terminal, des informations de configuration en provenance d'un dispositif réseau, les informations de configuration comprenant un premier seuil de transmission discontinue consécutif, DTX, et un deuxième seuil DTX consécutif, le premier seuil DTX consécutif étant associé à un premier groupe de porteuses, et le deuxième seuil DTX consécutif étant associé à un deuxième groupe de porteuses, le premier seuil DTX consécutif étant différent du deuxième seuil DTX consécutif ;
envoyer (720), par le premier terminal, des premières informations au deuxième terminal au moyen d'une porteuse dans le premier groupe de porteuses ;
envoyer (730), par le premier terminal, des deuxièmes informations au deuxième terminal au moyen d'une porteuse dans le deuxième groupe de porteuses ; et
arrêter (740), par le premier terminal, la transmission d'informations au moyen du premier groupe de porteuses lorsque le nombre de fois où le premier terminal ne parvient pas à détecter consécutivement un premier message de retour de demande de répétition automatique hybride, HARQ, correspondant aux premières informations, est supérieur ou égal au premier seuil DTX consécutif ; et
arrêter (740), par le premier terminal, la transmission d'informations au moyen du deuxième groupe de porteuses lorsque le nombre de fois où le premier terminal ne parvient pas à détecter consécutivement un deuxième message de retour HARQ correspondant aux deuxièmes informations est supérieur ou égal au deuxième seuil DTX consécutif.

2. Procédé selon la revendication 1, le procédé comprenant en outre les étapes suivantes :
libérer, par le premier terminal, une connexion de monodiffusion entre le premier terminal et le deuxième terminal lorsqu'il est déterminé que le nombre de fois où le premier terminal échoue à détecter consécutivement le premier message de retour HARQ correspondant aux premières informations est supérieur ou égal au premier seuil DTX consécutif et le nombre de fois où le premier terminal échoue à détecter consécutivement le deuxième message de retour HARQ correspondant aux deuxièmes informations est supérieur ou égal au deuxième seuil DTX consécutif.

3. Procédé selon la revendication 1 ou la revendication 2, dans lequel
le premier groupe de porteuses comprend une porteuse basse fréquence, et le deuxième groupe de porteuses comprend une porteuse haute fréquence ; ou
le premier groupe de porteuses comprend une porteuse de spectre autorisée, et le deuxième groupe de porteuses comprend une porteuse de spectre non autorisée.

4. Procédé selon la revendication 3, dans lequel
le deuxième seuil DTX consécutif est supérieur au premier seuil DTX consécutif.

5. Procédé selon la revendication 1 ou la revendication 2, dans lequel
le premier groupe de porteuses comprend une porteuse primaire, et le deuxième groupe de porteuses comprend une porteuse secondaire.

6. Procédé selon la revendication 5, dans lequel l'arrêt (740), par le premier terminal, de la transmission d'informations au moyen du premier groupe de porteuses si le nombre de fois où le premier terminal échoue à détecter consécutivement un premier message de retour HARQ correspondant aux premières informations est supérieur ou égal au premier seuil DTX consécutif comprend l'étape suivante :
arrêter, par le premier terminal, la transmission d'informations au moyen du premier groupe de porteuses et du deuxième groupe de porteuses si le nombre de fois où le premier terminal échoue à détecter consécutivement le premier message de retour HARQ correspondant aux premières informations est supérieur ou égal au premier seuil DTX consécutif.

7. Procédé selon la revendication 5 ou la revendication 6, le procédé comprenant en outre l'étape suivante :
libérer, par le premier terminal, la connexion de monodiffusion entre le premier terminal et le deuxième terminal si le nombre de fois où le premier terminal échoue à détecter consécutivement le premier message de retour HARQ correspondant aux premières informations est supérieur ou égal au premier seuil DTX consécutif.

8. Procédé selon la revendication 1, dans lequel les informations de configuration comprennent en outre un troisième seuil DTX consécutif et un quatrième seuil DTX consécutif, le troisième seuil DTX consécutif étant associé à un troisième groupe de porteuses, et le quatrième seuil DTX consécutif étant associé à un quatrième groupe de porteuses ; et
le procédé comprenant en outre les étapes suivantes :
envoyer (1120), par le premier terminal, des troisièmes informations au deuxième terminal au moyen d'une porteuse dans le troisième groupe de porteuses ;
envoyer (1120), par le premier terminal, des quatrièmes informations au deuxième terminal au moyen d'une porteuse dans le quatrième groupe de porteuses ; et
arrêter (1150), par le premier terminal, la transmission d'informations au moyen du troisième groupe de porteuses si le nombre de fois où le premier terminal ne parvient pas à détecter consécutivement un troisième message de retour HARQ correspondant aux troisièmes informations est supérieur ou égal au troisième seuil DTX consécutif ; et/ou
arrêter (1150), par le premier terminal, la transmission d'informations au moyen du quatrième groupe de porteuses si le nombre de fois où le premier terminal ne parvient pas à détecter consécutivement un quatrième message de rétroaction HARQ correspondant aux quatrièmes informations est supérieur ou égal au quatrième seuil DTX consécutif.

9. Procédé selon la revendication 8, le procédé comprenant en outre les étapes suivantes :
libérer, par le premier terminal, une connexion de monodiffusion entre le premier terminal et le deuxième terminal si le nombre de fois où le premier terminal échoue à détecter consécutivement le premier message de retour HARQ correspondant aux premières informations est supérieur ou égal au premier seuil DTX consécutif, le nombre de fois où le premier terminal échoue à détecter consécutivement le deuxième message de retour HARQ correspondant aux deuxièmes informations est supérieur ou égal au deuxième seuil DTX consécutif, le nombre de fois où le premier terminal échoue à détecter consécutivement le troisième message de retour HARQ correspondant aux troisièmes informations est supérieur ou égal au troisième seuil DTX consécutif, et le nombre de fois où le premier terminal échoue à détecter consécutivement le quatrième message de retour HARQ correspondant aux quatrièmes informations est supérieur ou égal au quatrième seuil DTX consécutif.

10. Procédé selon la revendication 8 ou la revendication 9, dans lequel
le premier groupe de porteuses et le deuxième groupe de porteuses comprennent une porteuse de spectre autorisée, le troisième groupe de porteuses et le quatrième groupe de porteuses comprennent une porteuse de spectre non autorisée, le premier groupe de porteuses et le troisième groupe de porteuses comprennent une porteuse basse fréquence, et le deuxième groupe de porteuses et le quatrième groupe de porteuses comprennent une porteuse haute fréquence.

11. Appareil (1200 ; 1300), l'appareil étant configuré pour exécuter le procédé selon l'une quelconque des revendications 1 à 10.

12. Support de stockage lisible par ordinateur comprenant des instructions qui, lorsqu'elles sont exécutées par un ordinateur, amènent l'ordinateur à exécuter le procédé selon l'une quelconque des revendications 1 à 10.

13. Produit programme informatique, comprenant des instructions qui, lorsqu'elles sont exécutées par un ordinateur, amènent l'ordinateur à exécuter le procédé selon l'une quelconque des revendications 1 à 10.
